# EUROPEAN PATENT SPECIFICATION

(11) **EP 4 125 503 B1**
(45) Date of publication and mention of the grant of the patent: **20.11.2024**
(21) Application number: 21714159.7
(22) Date of filing: 25.03.2021
(51) Int. Cl.: A47G 29/08, E06B 9/11, G06Q 10/08, G07F 11/00

(54) **A DISPATCH SYSTEM**
EIN VERSANDSYSTEM
UN SYSTÈME D'EXPÉDITION

(30) Priority: 26.03.2020 GB 202004400
(43) Date of publication of application: 08.02.2023
(73) Proprietor: Ocado Innovation Limited, Hatfield, Hertfordshire AL10 9UL (GB)
(72) Inventor: THORP, Max, Hatfield Hertfordshire AL10 9UL (GB); JOLLEY, Beth, Hatfield Hertfordshire AL10 9UL (GB); MILLARD, Nicholas, Hatfield Hertfordshire AL10 9UL (GB)
(74) Representative: Ocado Group IP Department
(86) International application number: PCT/EP2021/057700
(87) International publication number: WO 2021/191335

(56) References cited:
- CN-U- 209 879 611
- US-A1- 2019 031 399
- US-B1- 10 482 420

## Description

### Field of the Invention

The present invention relates to a dispatch system, more particularly to a secure locker system for the dispatch of items or goods.

### Introduction

In a traditional brick and mortar store based commerce, goods are typically distributed in a sequence from the manufacturer, to the wholesaler, to the retailer, and finally to the customer. Retail shops function as the end points of the distribution chain that a delivery carrier involves. The customers mostly have to take care of the `last mile' transportation of goods, i.e. delivery from the physical point of purchase to home; the end of the distribution chain may be extended to the consumer's households.

However, this is largely not the case with e-commerce where products purchased online are transported from a distribution centre to either a collection point accessible by a customer or directly to a customer's home in a timely manner. As a result, the development of online shopping has led to a plethora of different e-commerce models for the purchase of goods online. These range from the click and collect model where customers purchasing or selecting goods online can either pick the goods up in a store of choice or at a centralized collection location or a home delivery service where goods are delivered directly to the customer's premises. Examples of click and collect models are discussed in UK Patent GB240712B (Bearbox Limited), EP 1366442B1 and EP2375386A2 (ByBox Holdings Limited) which relates to a secure access system for the delivery of goods ordered by a customer online to an automated collection point (ACP), which is accessible by a customer. The automated collection point is typically has the form of a bank of electronically operated lockers controllable by a locker management system to control the allocation and access to one or more of the plurality of lockers upon receipt of an order of goods. Access to the lockers is provided by communicating a collection code to a customer's device upon receipt of an order of goods such that when the collection code unique to the order is entered into a local user interface coupled to the bank of electronically operated lockers, access to the goods stored in one or more of the lockers allocated to the customer is permitted.

In GB2407128B, the secure access system comprises a secure unit, and a logistics centre which is provided with details of access to be made to the secure unit. The logistic centre is in communication with a central management system to confirm access details and allow access to the secure unit, wherein the secure unit can allow access thereto in response to the use of an access code at a user interface. ACPs are often conveniently placed at locations such as transportation hubs and office clusters so consumers are able to pick up their online shopping on their way home. In EP2375386 (ByBox Holdings Ltd), the ACPs are controlled by a remote computing system which generates a package ID when an order is received, for example from an online retailer, the order optionally including a tracking number. A locker in a selected one of the ACPs is opened to receive the delivery when at least one of the package ID and the tracking number and, optionally, a delivery company ID is received at the interface. A collection code may be generated and transmitted to the customer, and the locker is opened to allow collection of the package when at least the collection code and, optionally, a customer PIN is received at the interface. Whilst, the use of ACPs dispersed at different locations are convenient for customers pick up their pre-packed online shopping, they still suffer from the drawback of the need of customers to travel to a destination in order to retrieve their online shopping, which in some cases involve the customer driving to the destination. Additionally, ACPs are geographically limited and likely not to be nearby any given online consumer.

As collection from ACPs becomes increasingly popular, queues can also develop where customers are forced to wait for access to one or more lockers allocated to their order, so one of the original drawbacks of bricks and mortar retail has now becomes a drawback of this form of online shopping. This could be due to the number of user interfaces necessary to enter a collection code or ID unique for a customer to gain access to their allocated locker. This problem is exacerbated where the order is a delivery of grocery where goods are stored at different temperatures and the customer is allocated more than one locker to cater for the different storing temperatures, e.g. frozen and chilled temperature. To mitigate this problem, EP2950283 (Norpe Oy) teaches a delivery box system for delivering grocery products to users comprising a number of delivery boxes, which are arranged as box modules and comprise a lockable door. In addition, the system comprises a control unit for controlling the operation of the lockable doors of the delivery boxes. The control unit is provided with door identifying information of the doors related to the products of a certain user and user identifying information of the user the products are to be delivered. The control unit is configured to enable the actual opening of the lock or access to the boxes in question and thereby enabling the actual opening of the lock of the door when said user identifying information is inputted into the control unit. For servicing a plurality of customers at the same time, the locking of the doors is configured to be released in a certain sequence so that the locking of the first door is configured to be released first and the locking of a second door is configured to be released only after said first door is opened and closed. By this, a customer can be guided to a certain route, such as logistically the shortest route. For guiding the customer to a right door, the system comprises a signalling device, e.g. LED, so that the door for each user is provided with a locking opening interface and corresponding signalling device indicating the correct doors for each user by different signalling indication. The signalling device can also be used to guide operatives in the fulfilment centre to the correct locker in which goods for dispatch are to be placed. Whilst releasing of the doors in a certain sequence may help to mitigate the queuing of the customers to retrieve their goods from the lockers allocated to them, this does not go far enough to prevent queuing at the ACP where the number of customers far exceeds the number of user interfaces at the ACP and the ability of the processor to process customer orders simultaneously. Whilst click and collect provides the benefit of purchasing goods online, there still exists the problem of the customer taking control of the `last mile' transportation of goods.

To the other spectrum of the e-commerce model is the provision of a logistical system that provides home delivery of goods to a customer's premises, e.g. home delivery, upon receipt of an order of goods. Thus, instead of the customers picking the goods at an automated collection point (ACP) such as in a store of choice or at a centralized collection location, the goods are delivered to the customer's premises which is usually the customer's residential home. Delivery information containing delivery addresses are used by online retailers such as Amazon and UK's Ocado to deliver goods to the customer's delivery address. Upon receipt of an order of goods identifying the intended customer's delivery address and to minimize the risk of unauthorised people taking delivery of the goods, online retailers such as Amazon and Ocado have their own dedicated vehicles and drivers to deliver the goods to the customer's premises. However, this prevents online retailers taking advantage of alternative couriers to make deliveries in a secure and safe manner. US 2013/0073477 (Greg Grinberg) teaches a method of logistics and/or operations for conducting a direct-to-consumer e-commerce retail business. An order is prepared or fulfilled at a fulfilment or distribution centre. The fulfilled order, together with a plurality of other fulfilled orders, is then transported to a product distribution location and the order is deposited in a product pick-up device such as inside or secured within a space, compartment, or drawer, the access to which is under the control of the customer. The order may be transported from the product pick-up device to a customer's residence, home, or work site by a local courier service. The product pick-up device comprises a plurality of compartments secured by a door lockable by an electronic device. However, the distribution chain still requires separate logistic service providers to transport the fulfilled orders from the distribution centre to the product pick-up devices or automated collection points for collection by either a customer or courier.

US 10482420 (Amazon Technologies, Inc.) teaches an on-demand locker assembly having a plurality of lockers into which a package is placed for retrieval by a customer. Entry into the locker is through the customer inputting an access code into an input device. The lockers and the input device form part of a barrier wall having a front side and a back side. The front side of the barrier wall is accessible to the customer for entry of the access code and retrieval of a package. The back side of the barrier wall is inaccessible to the customer and configured for placement of the package into the locker. Door latch solenoids are used to selectively open the front door in response to customer input of an access code so as to give the customer access to retrieve one or more packages from the locker assembly. In an illustrated embodiment of US 10482420 (Amazon Technologies, Inc.), the front door and the rear door includes a retractable rear door curtain coupled to a rotatable shaft. The front door and the rear door includes a front door latch mechanism and a rear door latch mechanism that interfaces with each other to close their respective doors. Whilst the on-demand locker assembly is suitable for non-perishable items, such a locker assembly is not suitable for the delivery of food and grocery commodities that are perishable. US2019031399 (Ocado Innovation Ltd.) teaches a storage system where goods are stored in containers and the containers are stored in stacks. Above the stacks runs a grid network of tracks on which load handling devices run. The load handling devices take containers from the stacks and deposit then at alternative locations in the stacks or deposit then at stations where goods may be picked out.

Any references contained here within to "embodiments" or "examples" may refer to unclaimed subject matter.

A pick-up device or dispatch system is thus required that allows a distribution centre to:
i) take advantage of different couriers to provide a home delivery service in a safe and secure manner, and
ii) remove the need to have a separate logistic service provider to transport the fulfilled orders to the pick-up device or dispatch station and thereby, streamline the distribution chain,
iii) be able to store perishable food and grocery commodities for collection at strict storage temperature requirements, e.g. chilled or frozen.

This application claims priority from GB application number GB2004400.4 filed on 26th March 2020.

### Summary of Invention

The present applicant has mitigated the above problem by integrating an automated collection point (ACP) into a distribution centre or fulfilment centre. This allows the distribution centre to fulfil an order of one or more items directly from the fulfilment centre for pick up by either a home delivery service provider such as courier or by the end customer. By integrating the ACP of the present invention into the distribution centre provides an e-commerce platform that allows home delivery retailers such as UK Ocado to use alternative couriers in a safe and secure manner. For the purpose of the present invention, automated collection points is construed to include electronically controllable lockers or pick-up points. To prevent unauthorised pick up of ordered goods from the distribution or fulfilment centre, the present invention provides a fulfilment centre or distribution centre (34) for fulfilling an order of one or more items in accordance with claim 1.

The items can be any goods or grocery commodities. The goods or items are bundled together in a package or bag for dispatch to a customer. The terms "items", "goods", and "packages" are used interchangeably. The present invention provides a plurality of lockers where the interior space of each of the plurality of lockers is accessible at opposing ends of the lockers and a door mechanism that allows access to only one end of the lockers at any one time. The plurality of lockers can be a bank of lockers.

The plurality of lockers of the present invention forms part of an exterior wall of a fulfilment or distribution centre such that the interior space of each of the plurality of lockers is accessible through a first opening exterior of the fulfilment centre and a second opening interior of the fulfilment centre. Optionally, the first opening and the second opening are at opposing ends of the interior space of each locker of the plurality of lockers.

The plurality of lockers comprises a door mechanism operable to selectively close or cover the first opening(s) of a one or more of the plurality of lockers from the exterior of the fulfilment centre (34) and the second opening(s) of one or more of the plurality of lockers from the interior of the fulfilment centre. A locking mechanism is configured to lock and unlock the door mechanism;
a) to prevent access to an interior space (28) of one or more of the plurality of lockers through the respective first opening but to permit access to the to the interior space (28) of one or more of the plurality of lockers through the respective second opening; and
b) to prevent access to the interior space (28) of one or more of the plurality of lockers through the respective second opening but to permit access to the interior space (28) of one or more of the plurality of lockers through the respective first opening.

A door mechanism is required that selectively permits one or more of the plurality of lockers to be closed from either from the exterior of the fulfilment centre or from the interior of the fulfilment centre or both. The one or more of the plurality of lockers can be any number of lockers. This allows multiple lockers to be collated together in a sub-group of two or more lockers for fulfilling a single order and allows multiple items to be separated by placing them in the sub-group of lockers from the interior of the fulfilment centre without the effort to open a door for each of the lockers. For example, a single customer order can include one or more items stored at different temperatures, e.g. chilled and frozen. To separate the goods from each other, the sub-group of lockers comprises a first locker and a second locker, the first and second lockers are configured for storing one or more items at different temperatures. The door mechanism can be configurable to allow an operative interior of the fulfilment centre to gain access to a sub-group of lockers at the same time but also be able to prevent access to the interior space of each of the lockers from the exterior of the fulfilment centre.

There are numerous examples according to the present invention to provide a door mechanism that can be configured to selectively permit access to each of the plurality of lockers from the exterior of the fulfilment centre and from the interior of the fulfilment centre.

In a first example, the door mechanism comprises an exterior door for closing the first opening(s) of one or more of the plurality of lockers exterior of the fulfilment centre; and an interior door for closing the second opening(s) of one or more of the plurality of lockers from the interior of the fulfilment centre; and wherein the locking mechanism selectively locks the exterior door or the interior door such that the exterior door is locked when the interior door is unlocked and the interior door is locked when the exterior door is unlocked.

In the first example of the present invention, the door mechanism comprises an exterior door for closing the first opening of one or more of the plurality of lockers at the exterior of the fulfilment centre and an interior door for closing the second opening of one or more of the plurality of lockers from the interior of the fulfilment centre. Preferably, the one or more of the plurality of lockers comprises two or more lockers such that the exterior door and/or the interior door is a single door shared by the sub-group of the two or more lockers. For example, a single interior door can be sized to close the second openings of two or more of the plurality of lockers from the interior of the fulfilment centre but the exterior door can be sized to only close the first opening of each of the two or more lockers. This not only allows two or more lockers to be in an open configuration for separating multiple items of a single order, e.g. frozen and chilled items, but also allows multiple items stored at different temperatures to be dispatched into two or more lockers at the same time.

In another example, the door mechanism comprises a bi-directional roller shutter (30), said bi-directional door being selectively positionable between:
i) a first position so as to prevent access to the interior space (28) of one or more of the plurality of lockers through the first opening (24) and to permit access to the interior space of one or more of the plurality of lockers through the second opening; and
ii) a second position so as to prevent access to the interior of one or more of the plurality of lockers through the second opening and to permit access to the interior space of one or more of the plurality of lockers through the first opening (24), and
wherein the locking mechanism is configured for locking the bi-directional door in the first position or the second position.

The bi-directional roller shutter is moveable or positionable between a first position to prevent access to the interior space of the locker through the first opening and a second position to allow access to the interior space of the locker through the first opening, and a locking mechanism for locking and/or unlocking the bi-directional roller shutter in the first position to prevent unauthorised persons from gaining access to the interior space of the lockers through the first opening. Preferably, the first opening and the second opening are at opposing ends of the interior space of the locker such that the bi-directional roller shutter is selectively positionable between the first position and the second position at any one time. Preferably, the bi-directional roller shutter is guided by a guide rail or track that extends from the first opening to the second opening such that the bi-directional roller shutter is guided along the guide rail or track to be selectively positionable between the first position and the second position. The guide rail or track allows the bi-directional roller shutter to selectively open the first opening and/or the second opening in a single operation. For the purpose of the present invention, a single operation encompasses an operation through a single movement, in this case lifting or pulling of the bi-directional roller shutter. The use of a bi-directional roller shutter removes the need to have a separate front and back door to selectively open and close the front and the back of each the lockers in order to collect and dispatch ordered items to and from the lockers.

To allow the fulfilment centre or distribution centre to prepare or fulfil an order of one or more items, the interior space of each of the plurality of lockers is accessible through a second opening such that in the first position of the bi-directional roller shutter of at least one of the plurality of lockers (when the first opening is closed), the interior space of the at least one of the plurality of lockers is accessible through the second opening and in the second position of the bi-directional roller shutter of the least one of the plurality of lockers, access to the interior space of the at least one of the plurality of lockers is prevented through the second opening (when the first opening is open). The fulfilled orders are deposited in the lockers through the second opening. For the purpose of the present invention, to fulfil an order, items specified in each order are retrieved or "picked" from inventory.

The locking mechanism can comprise at least one solenoid operated deadbolt, which is moveable to the locked position when the bi-directional roller shutter is moved to the first position to prevent access to the interior space of the locker through the first opening. The locking mechanism can automatically move to the locked position when one or more sensors mounted to the locker sense that the bi-directional roller shutter is in the first position.

In the example where the door mechanism comprises a separate exterior door for gaining access to the interior space of one or more of the plurality of lockers through the first opening and an interior door for gaining access to the interior space of one or more of the plurality of lockers through the second opening, signals from one or more sensors can be used to automatically lock the exterior door when the interior door is open and conversely, lock the interior door when the exterior door is open. The one or more sensors can be but are not exclusively limited to contact sensors, light sensors, or pressure sensors, weight sensors or a combination thereof.

Having a door mechanism that allows access to the interior space of each of the plurality of lockers not only allows one or more items retrieved from the fulfilment centre to be efficiently placed in the lockers for dispatch, but also benefits from the temperature controlled environment within at least a portion of the interior of the fulfilment centre. Preferably, the temperature of the interior of the at least the portion of the fulfilment centre (34) is controllable to provide a chilled temperature or a frozen temperature.

More preferably, the door mechanism is positioned such that the second opening of one or more of the plurality of lockers (12) is exposed to the interior of the fulfilment centre until one or more items in one or more of the plurality of lockers is collected. This allows cool air from the interior of the at least the portion of the fulfilment centre maintained at a chilled temperature or a frozen temperature to be able to cool the interior of one or more of the plurality of lockers without the need for a separate cooling system for one or more of the plurality of lockers. Preferably, the one or more of the plurality of lockers comprises one or more fans for circulating cool air from the interior of the at least the portion of the fulfilment centre to the interior space of the one or more of the plurality of lockers.

One or more of the plurality of lockers can comprise a weight sensor for determining the weight of one or more items deposited in one or more lockers. The one or more weight sensors can be used to detect collection of one or more items from the one or more of the lockers. The signal from the weight sensors can be used as an indication when goods have been collected from the lockers and/or when unauthorised attempts have been made to retrieve goods from one or more of the lockers. Preferably, the door mechanism can be configured to close or open the first opening and/or the second opening of one or more of the plurality of lockers when an order of one or more items has been dispatched or collected from the one or more of the plurality of lockers. For example, the door mechanism can be configured such that the exterior door or the interior door is biased in an open configuration and the locking mechanism can be actuated to open the exterior door or the interior door depending whether one or more items are collected from the one or more of the plurality of lockers or dispatched into the one or more of the plurality of lockers. Optionally, a signal from one or more sensors can also be used to actuate the locking mechanism to the locked position after a predetermined amount of time when goods or one or more packages are collected from the lockers.

Optionally, the bi-directional roller shutter can be motorised to automatically move to the first position to prevent access to the interior space of the lockers once an order items have been removed from the lockers. More preferably, the bi-directional roller shutter can automatically move to the first position after a predetermined amount of time has elapsed in response to a signal from one or more sensors or a weight sensor detecting retrieval of goods from one or more of the lockers.

Preferably, the plurality of lockers form part of a barrier wall to form a plurality of hatches having a front side and a back side, the front side defining the collection side and the back side defining the dispatch side. By forming the plurality of lockers as part of a barrier wall, the rear or back side or the dispatch side of the lockers are inaccessible to the customer or courier. Having a door mechanism such as a bi-directional roller shutter that is moveable to selectively open and close opposing ends of the interior space of a locker at any one time, allows the plurality of lockers to be mounted to at least one exterior wall of a fulfilment centre to define a plurality of hatches such that the first opening is exterior of the fulfilment centre and the second opening is exposed to the interior of the fulfilment centre.

Preferably, the first opening defines a collection side for the collection of one or more packages from at least one of the plurality of lockers and the second opening defines a dispatch side for the dispatch of one or more fulfilled or prepared orders (ordered items bundled into packages) into at least one of the plurality of lockers, and wherein the locking mechanism is configured for locking and/or unlocking the door mechanism at the collection side. For the purpose of the present invention, the collection side can be a customer side for pick up by a customer or a courier side for pick up by a courier.

When an order for one or more items are prepared or fulfilled at the fulfilment centre and packed into one or more packages, the second opening which is at the dispatch side of the lockers is open for the fulfilled orders to be deposited into allocated lockers. The second opening is accessible from the interior of the fulfilment centre for goods to be deposited into their allocated lockers. Since the first opening is at the collection side and the second opening is at the dispatch side, movement of the bi-directional to the first position across the first opening at the collection side prevents access to the interior space of the locker through the collection side and thereby secures the interior space from unauthorised entry into the locker but allows access to the second opening to permit an operative or dispatcher to deposit fulfilled orders into the locker, i.e. securing the interior space of the locker at one side of the locker from unauthorised entry whilst keeping the other side open to deposit fulfilled orders. Equally, covering the first opening by the exterior door of one or more of the plurality of lockers prevents access to the interior space of one or more of the plurality of lockers through the collection side, and thereby secures the interior space from unauthorised entry into the one or more of the plurality of lockers. Opening the interior door of one or more of the plurality of lockers permits an operative or dispatcher to deposit fulfilled orders into one or more of the plurality of lockers via the second opening.

Where an order of one or more items involves the delivery of food and grocery goods that are of a perishable nature, storage of goods must adhere to strict temperature and environmental requirements, e.g. chilled or frozen temperature. Traditionally, the interior space of a bank or group of lockers is cooled by a separate dedicated cooling system to store the perishable goods. For example, US2198239, GB615167, EP3071076 relate to refrigerated locker systems where a dedicated refrigeration unit circulates cool air around or through the plurality of lockers via suitable conduits to cool the locker contents. Other temperature controlled lockers taught in the art, e.g. WO2015114331 (Illinois Tool Works Inc.), relate to a temperature controlled lockable storage apparatus wherein the temperature of a bank of lockable compartments is cooled by a separate compression refrigeration unit comprising a compressor, a condenser, one or more expansion valves to control the delivery of refrigerant to each of the lockers and an evaporator.

Configuring the lockers of the present invention as hatches removes the need to have a separate cooling system as the lockers of the present invention can take advantage of the temperature controlled atmosphere in a fulfilment centre. As the temperature of fulfilment or distribution centres is carefully controlled to store perishable goods, by integrating the lockers of the present invention into the fulfilment centres, the dispatch system of the present invention is able to make use of the cold air in the fulfilment centre to cool the interior space of the lockers. Since the dispatch side (second opening) of the each of the lockers is open when the collection side (first opening) is closed, cool air circulating within the fulfilment can be used to cool the interior space of each of the lockers adequate to store perishable goods at the dispatch side (second opening) until when the goods are collected by a recipient such as a courier or customer at the collection side. Typically, fulfilment centres or distribution centres for the storage of inventory for delivery of goods that are of a perishable nature comprise one or more chillers that circulate cool air within the fulfilment centre to maintain the temperature of the interior of the fulfilment centre at the required storing temperature, e.g. chilled or frozen. Usually, the fulfilment centre are sectioned to provide a chilled and/or a frozen zone for the storage of perishable goods, e.g. grocery commodities. The use of the door mechanism according to the present invention, e.g. separate exterior/interior doors or a bi-directional roller shutter, allows to keep the second opening at the dispatch side of at least one of the lockers open (or exposed) when the first opening at the collection side is closed so that the temperature inside the at least one of the lockers reaches an equilibrium state with the temperature inside the fulfilment centre. By locating the plurality of lockers in the chilled or frozen zone of the fulfilment centre, the temperature inside the lockers reaches the temperature of either the chilled or frozen temperature depending whether the plurality or bank of lockers are located in the fulfilment centre. Since the interior space of each of the lockers is relatively small in comparison to the interior space of the fulfilment centre, the temperature of the interior space of the lockers rapidly cools to reach an equilibrium state with the surrounding temperature in the fulfilment centre.

Whilst the bi-directional roller shutter provide some degree of insulation to the interior space of the lockers when the bi-directional roller shutter is positioned at the first position so as to prevent perishable goods stored in the lockers being exposed to external ambient conditions, preferably, the door mechanism of at least one of each of the plurality of lockers comprises an outer door mounted exterior of the bi-directional roller shutter at the first opening. More preferably, the outer door is lined with thermal insulation such that the outer door is closable to insulate the interior space of at least one of each of the plurality of lockers. The outer door mounted externally of the bi-directional roller shutter also provides additional security to prevent unauthorised personnel from trying to prise open the bi-directional roller shutter and gaining access to the interior of the locker. Similarly to the bi-directional roller shutter, the locking mechanism can be arranged to lock the outer door when closed against the first opening.

To prevent unauthorised entry of the interior space of the lockers, the dispatch system further comprises:
i) an access control module for controlling the locking and/or unlocking of the locking mechanism to grant or deny access to the interior space of one or more of the plurality of lockers;
ii) a local user interface in cooperation with the access control module.
iii) a control module comprising a collection code generation means and a collection code communication means for generating and communicating a collection code unique to an order of one or more items to the access control module;
iv) a data communication means in cooperation with the control module; said data communication means is adapted to receive the unique collection code from the control module such that when the unique collection code is subsequently entered into the local user interface, actuates the locking mechanism to permit access to the interior space of one or more of the plurality of lockers.

Optionally the control module is operatively coupled to a network comprising one or more processors and memory storing instructions that when executed by the one or more processors cause the one or more processors to generate a collection code unique to an order of one or more items and communicate the collection code to the access control module.

The locking mechanism is arranged to lock the bi-directional roller shutter when the bi-directional roller shutter is in the first position so as to prevent an unauthorised person from gaining entry into the interior space of the locker through the first opening. Since the first opening is at the collection side of the lockers, actuating the locking mechanism when the bi-directional roller shutter is at the first position prevents unauthorised access and therefore, theft of goods stored from the lockers. Similarly, the locking mechanism is arranged to lock the exterior door so as to prevent an unauthorised person from gaining entry into the interior space of the locker through the first opening.

Preferably, the dispatch system of the present invention comprises an access control module for controlling the locking and/or unlocking of the locking mechanism to grant or deny access to the interior space of each of the plurality or bank of lockers and a local user interface in cooperation with the access control module for inputting a collection code or access code unique to an order to actuate the locking mechanism. Preferably, the control module is configured to communicate with the access control module across a network. The network may comprise a local area network (LAN), a wide area network (WAN) or any other type of network. The access control module can be wired to or wirelessly coupled to the network.

Preferably, the dispatch system comprises a control module comprising a collection code generation means and a collection code communication means for generating and communicating a collection code unique to an order of one or more items to the access control module. The collection code uniquely identifies the order of one or more items and is generated upon receipt of the order of one or more items.

Upon receipt of an order, the control module generates a collection code which uniquely identifies the order. A data communication means in cooperation with the control system is adapted to receive the unique collection code from the control module such that when the collection code is subsequently entered into the local user interface, the locking mechanism unlocks at least one of the plurality of lockers storing one or more packages containing the ordered items.

Instead of the solenoid operated deadbolt discussed above, optionally, the locking mechanism can comprise a self-latching mechanical lock mechanism that is configured to automatically lock when the bi-directional roller shutter is moved to the first position on the collection side of the locker or when the exterior door is closed against the first opening. The locking mechanism further comprises an electromagnetic lock release mechanism that is configured to release the self-latching mechanical lock mechanism in response to when a collection code unique to a particular order is entered into the access control module via the local user interface.

Preferably, the data communication means is a wireless transmitter/receiver means. Optionally, the data communication means is a mobile device or a personal computer. Optionally, the control module sends the collection code to the recipient in any convenient way, e.g. via, email or SMS message, to the recipient's mobile device. For the purpose of the present invention, the 'recipient' can include a customer and/or a courier.

To improve security, preferably, the local user interface comprises a first input device and a second input device such that the access control module is configured to grant access to at least one of the plurality of lockers by inputting the collection code into the first input and the second input device. Optionally, the first input device is common to or associated with the group of lockers such that the first input device is shared amongst the group of lockers and the second input device is associated with a sub-group of one or more of the plurality of lockers such that the second input device is shared amongst the sub-group of one or more lockers. For example, access to one or more allocated lockers is dependent on the customer or courier inputting a unique collection code into a first input device global to the plurality of lockers and a dedicated second input device specific to an allocated locker. Optionally, the collection code unique to an order is inputted into the first input device and a validation code is inputted into the second input device, the second input device located at the allocated locker. Access to the interior space of one or more lockers allocated to a recipient's order is permitted, when the control module and/or the access control module validates the collection code provided to the first input device and the validation code provided to the second input device. Optionally, the collection code can be shared between the first input device and the second input device such at a portion of the collection code is input into the first input device and the collection code is completed by inputting the remaining portion of the collection code into the second input device.

In addition to improving security, the two step inputting of the collection code into a first input device and a second input device provides a short delay between both of the inputting steps that is sufficient to allow an order to be fulfilled and in the case of frozen goods, fulfilled orders transferred from a freezer to an allocated locker. More specifically, the first input device can provide a notification to a dispatcher or operative to prepare or fulfil an order of one or more items from an inventory in the fulfilment centre and/or transport the fulfilled order to an identified locker. For example, legislation requires that frozen foods can only be stored at room temperature for a predetermined amount of time before it is deemed not fit for human consumption. To make sure that items that require storage at a frozen temperature are not left at an elevated temperature, e.g. room temperature or chilled temperature, for too long before it is deemed not fit for human consumption, items that require storage at frozen temperature can be stored separately in a freezer compartment before being dispatched into the lockers, e.g. a standalone freezer. A notification is provided to an operative to transport ordered frozen items from the freezer to a locker of choice once a recipient such as a courier enters the collection code into the first input device. The recipient is then allowed to retrieve the frozen goods from the identified locker, when the recipient subsequently enters the collection code or a separate validation code into the second input device.

Preferably, the local user interface comprises at least one of a keyboard, a Bluetooth receiver, an image scanner, a microphone, pointing device, a biometric input device, a face recognition device, an iris recognition device, a retina recognition device, a near field communication reader, a radio frequency identification reader, a linear and/or matrix barcode reader, a payment card reader, a smart card reader, an infra-red reader. More preferably, each of the first input device and the second input device comprises any one of a keyboard, a Bluetooth receiver, an image scanner, a microphone, pointing device, a biometric input device, a face recognition device, an iris recognition device, a retina recognition device, a near field communication reader, a radio frequency identification reader, a linear and/or matrix barcode reader, a payment card reader, a smart card reader, an infra-red reader.

Preferably, the access control system comprises a guidance means to guide a user to one or more of the plurality of lockers allocated to the user (e.g. courier or customer) in response to the user inputting the collection into the local user interface.

The present invention makes use of a guidance means to guide a recipient to their allocated locker in order to minimise the time taken to collect their order from their allocated locker. More preferably, the guidance means comprises an output device for communicating a location of the one or more of the plurality of lockers allocated to the recipient. The output device is at least one of: a display screen, a speaker, earphones, a printer, a voice output communication aid, a navigation system, a scanner stations, a personal communications device, an access control console, a path projection system, a customer information display panel, a lights based system, e.g. LED. Optionally, the local user interface comprises an output device that directs the recipient to their allocated locker. When a recipient of an order enters a collection code unique to an order, the output device guides the recipient to their allocation locker. This could be in the form of an identification of a locker, e.g. number or letter. Alternatively or in combination, each of the lockers comprises signalling means to direct a user to their allocated locker. Optionally, the signalling means can comprise a light that illuminates to direct the recipient to their allocated locker.

The guidance means can also allow two or more recipients to contemporaneously collect their order from the locker so as to permit a plurality of users to contemporaneously access their allocated locker, thereby removing the need for users (recipients) to queue at the lockers. Equally, the guidance means can allow two or more operatives to simultaneously place orders in their allocated lockers.

To identify each of the lockers in a bank or plurality of lockers, preferably, each of the plurality of lockers comprises a label (e.g. electronic label) readable by a user interface for establishing an identity of each of the plurality of the lockers. Optionally, the label can comprise a barcode, 1-D barcode, 2-D barcode, or a QR code or a RFID tag. Preferably, the control module, in communication with the local user interface, is configured to:
i) retrieve an identification of one or more of the packages unique to an order and an identification of one or more lockers allocated to store the one or more of the packages from a memory device,
ii) correlate the identity of one or more of the allocated lockers to a corresponding collection code unique to the order,
iii) communicate the identity of the one or more of the allocated lockers to the access control module such that when the corresponding collection code is provided to the access control module via the local user interface, access to the one or more of the allocated lockers is permitted.

For example, the control module is configured to assign the identity of one or more lockers unique to an order to a corresponding collection code; the collection code being the master code to one or more allocated lockers. Optionally, the one or more of the packages comprises a label readable by a package user interface for establishing the identity of each of the one or more packages. Here, one or more of the fulfilled orders are placed in one or more packages. Optionally, the label of one or more of the packages can be a barcode, 1-D barcode, 1 2-D barcode, or a QR code or a RFID tag. A handheld scanner can be used to identify the identification of one or more of the packages and the identification of one or more of allocated lockers where the ordered one or more packages are stored. Optionally, the control module is configured to correlate the identity of one or more packages unique to an order to a corresponding collection code. Thus, the identity of the one or more allocated lockers and the identity of the one or more packages stored in the allocated lockers are correlated to a corresponding collection code. Thus, the collection code unique to an order can be used to track the status of the order.

In a further aspect of the present invention, a method of collecting one or more packages from a dispatch system of the present invention upon receipt of an order of one or more packages, comprising the steps of:
i) by the control module, generating a collection code upon receipt of the order of the one or more packages,
ii) establishing a communication between the control module and the access control module, and communicating the collection code to the access control module;
iii) by the access control module, actuating the locking mechanism to permit collection of the one or more packages from one or more of the plurality of lockers upon receipt of the collection code.

Preferably, the method further comprises the steps of:
v) inputting the collection code to the access control module via the local user interface,
vi) comparing the collection code with at least one of the collection codes stored in the access control module,
vii) in an event that the collection code corresponds to at least one collection codes stored in the access control module, actuating the locking mechanism to permit access to the interior space of the locker allocated to the order.

In yet a further aspect of the present invention, a method of dispatching one or more packages to a dispatch system according to the present invention upon receipt of an order of one or more items, comprising the steps of:
i) identifying one or more lockers allocated for the storage of one or more of the packages unique to the order,
ii) communicating the identification of the allocated locker to the control module.
iii) by the control module, correlating the identification of the allocated locker to a collection code unique to the order.

Preferably, the method further comprises the steps of:
iv) identifying the one or more of the packages unique to the order,
vii) communicating the identification of the one or more packages to the control module,
viii) by the control module, correlating the identification of the one or more packages with the corresponding collection code unique to the order.

Optionally, the identification of the one or more packages is determined by scanning a label placed on the one or more packages. Optionally, the label comprises a barcode, 1-D barcode, 1 2-D barcode, or a QR code or a RFID tag.

### Brief Description of the Drawings

Further features and aspects of the present invention will be apparent from the following detailed description of an illustrative embodiment made with reference to the drawings, in which:
Figure 1 is a schematic front view of a bank of lockers forming part of the structural wall of a fulfilment centre for the collection of purchased items according to an embodiment of the present invention,
Figure 2 is a schematic rear view of the bank of lockers showing the inside of the fulfilment centre for the dispatch of fulfilled orders into the plurality of lockers according to an embodiment of the present invention.
Figure 3 is a schematic bird's eye view inside the fulfilment centre showing the preparation or fulfilment of orders for dispatch into the plurality of lockers according to an embodiment of the present invention.
Figures 4(a) and 4(b) are schematic side views of an individual locker showing (a) the bi-directional roller shutter in a first position and (b) in a second position according to an embodiment of the present invention.
Figure 5 is a schematic view of the environment showing various components of the dispatch system according to an embodiment of the present invention.
Figure 6 is a schematic view of the components of the dispatch system according to an embodiment of the present invention.
Figure 7 provides a schematic view in the form of a flow chart representing the stages in the notification and collection of one or more packages from the dispatch system according to an embodiment of the present invention.
Figure 8 provides a schematic view in the form of a flow chart representing the stages of the fulfilment and dispatch of one or more packages into the lockers according to an embodiment of the present invention.
Figure 9 provides a schematic in the form of a flow chart representing the stages in the fulfilment and dispatch of one or more packages from the freezer into the lockers according to an embodiment of the present invention.
Figure 10 provides a schematic in the form of a flow chart representing the stages in the allocation of a locker to one or more packages according to an embodiment of the present invention.
Figure 11 provides a schematic in the form of a flow chart representing the stages in the allocation of a locker to one or more packages according to an embodiment of the present invention.
Figure 12 provides a schematic in the form of a flow chart representing the stages in the allocation of a locker to one or more packages according to an embodiment of the present invention.
Figures 13(a), 13(b), and 13(c) illustrate different arrangements of fans to circulate cool air from the fulfilment centre into the interior spaces of the lockers according to an embodiment of the present invention.
Figures 14(a), 14(b), and 14(c) provide schematic front, rear, and side views of a plurality of lockers according to an embodiment of the present invention.
Figures 15(a), 15(b), and 15(c) provide schematic isometric rear and side views of a bank of lockers according to an embodiment of the present invention.
Figure 16 is a schematic view of a transfer system within a fulfilment centre.

### Detailed Description

An order fulfilment or warehouse facility typically includes a receiving operation for receiving shipments of stock from various vendors and storing the received stock in inventory. Inventory can include but are not limited to food and grocery commodities of a perishable nature that is required to be stored at strict storage temperatures. For the purpose of the present invention, the different storage temperature include ambient control temperature, chilled temperature and frozen temperature. Frozen temperature covers a range between substantially -25°C to substantially 0°C, more preferably between substantially -21°C to substantially -18°C; the chilled temperature covers a range between substantially 0°C to substantially 5°C and the ambient controlled temperature coves a range between substantially 4°C to substantially 21 °C, preferably substantially 18°C.

The distribution of food and grocery commodities mostly involves the delivery of packages of items/goods from the fulfilment facility consisting of one or more bags, boxes or containers filled with a number of goods or items unique to an order. The goods or items include but are not exclusively limited to food and grocery commodities and can include ordered items for delivery to a customer. Recently e-commerce has moved into the area of home delivery of food and grocery commodities that do not have traditional retail stores. The efficient and time-saving features of this approach can be valuable to customers, but the level of customer service involved can also make it expensive. Included in this expense is the limitation on the number of customers that can be serviced during any given delivery period given various limitations that include delivery truck or vehicle space.

The present invention has mitigated this limitation by improving the flexibility by which fulfilled orders can be retrieved directly from the fulfilment centres and delivered to the customers so as to fulfil orders of home delivery of food and grocery commodities to the customers. The particular embodiment of the present invention allows a pure online retailer that does not have traditional retail stores to deliver food and grocery commodities in a secure and safe way. The present invention allows pure online retailers to use various reputable courier services and thereby, increase the number of customers that can be serviced during any given delivery period. Thus, instead of restricting to the use of a single courier which is generally associated with the online retailer, the present invention allows a multitude of different delivery or couriers to deliver the food or grocery commodities to the customers so maintaining the home delivery service within a given time slot.

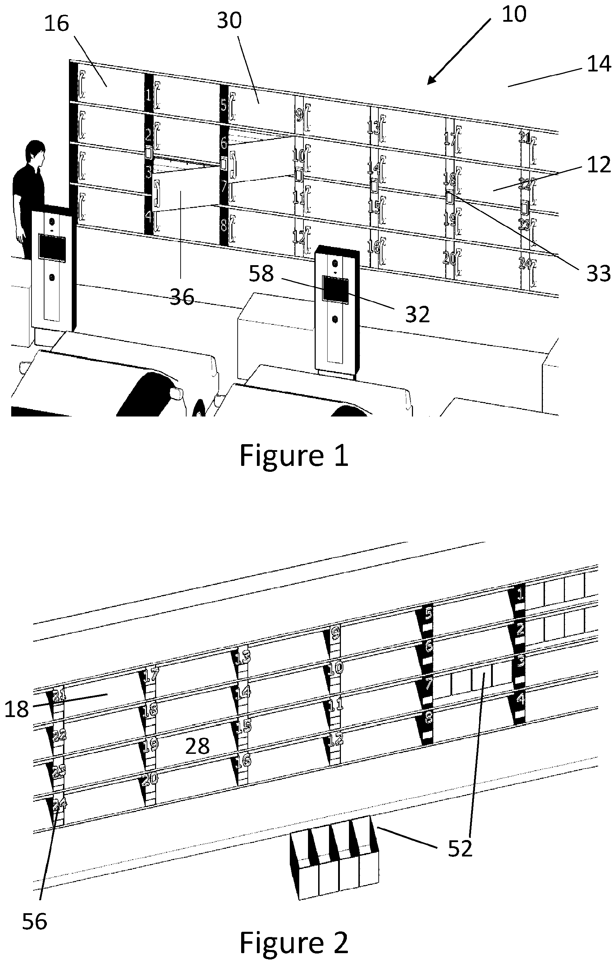

The present invention provides a dispatch system 10 that allows fulfilled orders to be dispatched for delivery to the customers directly from the fulfilment centre and therefore, providing a more simplified logistical system. Referring now to the drawings. Figure 1 shows a dispatch system 10 according to an embodiment of the present invention comprising a plurality of lockers 12. The plurality of lockers 12 form at least part of a barrier 14 to a fulfilment centre having a front side 16 and a back side 18. The front side 16 of the barrier is accessible by a user such as a courier for the collection of goods. For the purpose of explanation of the present invention, the front side will be referred to as the collection side 16. The back side 18 of the barrier is configured for dispatch of the fulfilled orders into the lockers. For the purpose of the present invention, the back side or the rear side will be referred to as the dispatch side 18 for the dispatch of fulfilled orders into the lockers. An order is fulfilled when good or items specified in each order are retrieved or picked from inventory (which also may be referred to as stock storage) in the order fulfilment facility.

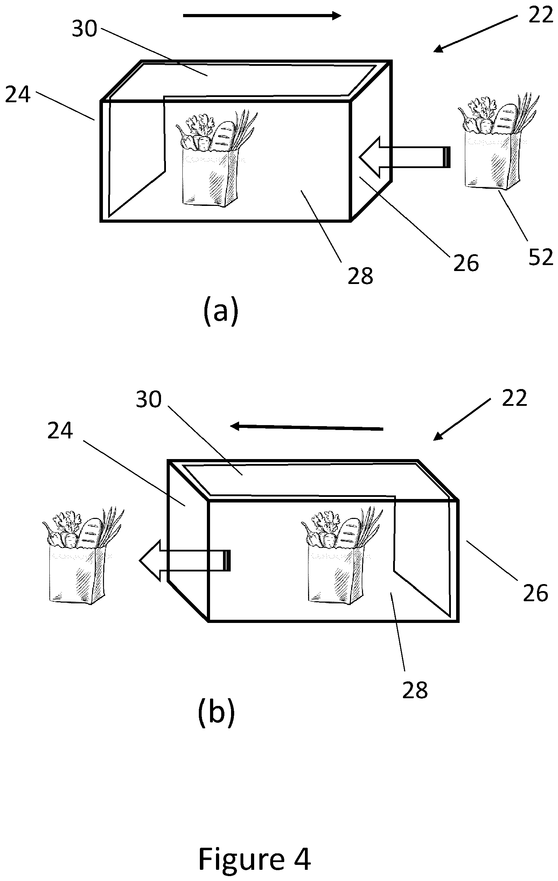

The barrier 14 according to an embodiment of the present invention, is a structural wall of a building or facility or centre. As shown in Figure 1, the plurality of lockers 12 is formed into at least one structural wall 14 of the fulfilment facility or centre to form a plurality of hatches or dispatch hatches. Figures 4(a) and 4(b) show schematic views of an individual locker 22 according to an embodiment of the present invention. As shown in Figure 4(a) and 4(b), each of the plurality of hatches or lockers has a first opening 24 at the collection side 16, a second opening 26 at the dispatch side 18 and an interior space 28 between the first opening 24 and the second opening 26 for the storage of goods or packaged goods.

The lockers 12 can be seen to be positioned in an external wall of the fulfilment centre so that they are substantially flush with the surface of the exterior wall 14 of the fulfilment centre. A door mechanism is provided that is operable to selectively close the first opening of one or more of the plurality of lockers from the exterior of the fulfilment centre and the second opening of the one or more of the plurality of lockers from the interior of the fulfilment centre,

In the particular embodiment of the present invention shown in Figure 1, each of the plurality of lockers 12 comprises at least one bi-directional roller shutter 30 that is moveable to position across either the first opening 24 or the second opening 26 to prevent or permit access to the interior space 28 of the locker either through the first opening 24 or the second opening 26 in a single operation, e.g. a single movement. The single operation could be lifting one edge of roller shutter or pulling one edge of the roller shutter. The bi-directional roller shutter herein defined roller shutter is arranged to travel along guide or tracks that extend across the first opening to across the second opening such that movement of the roller shutter in a single operation, e.g. by lifting or pulling an edge of the roller shutter, moves the roller shutter across the first opening or the second opening. The door mechanism is not limited to a bi-directional roller shutter and other examples of a door mechanism that is operable to selectively close the first and second opening of each of the plurality of lockers is discussed below.

The bi-directional roller shutter 30 prevents an unauthorised user of the lockers from pilfering the contents of the locker. The arrows shown in Figure 4(a) and 4(b) show the direction of movement of the bi-directional roller shutter 30 across the first opening 24 at the collection side 16 and the second opening 26 across the dispatch side 18. Entry into the interior space 28 of the lockers 12 is controlled by a locking mechanism (not shown) which in turn is controlled by an access control module 32 comprising an access control processor and a machine readable media such as a barcode or QR code scanner. The access control processor can be any processing device known in the art. Typical examples include but are not limited to microprocessor. The processor can be communicatively coupled to a computer readable media such as a memory device.

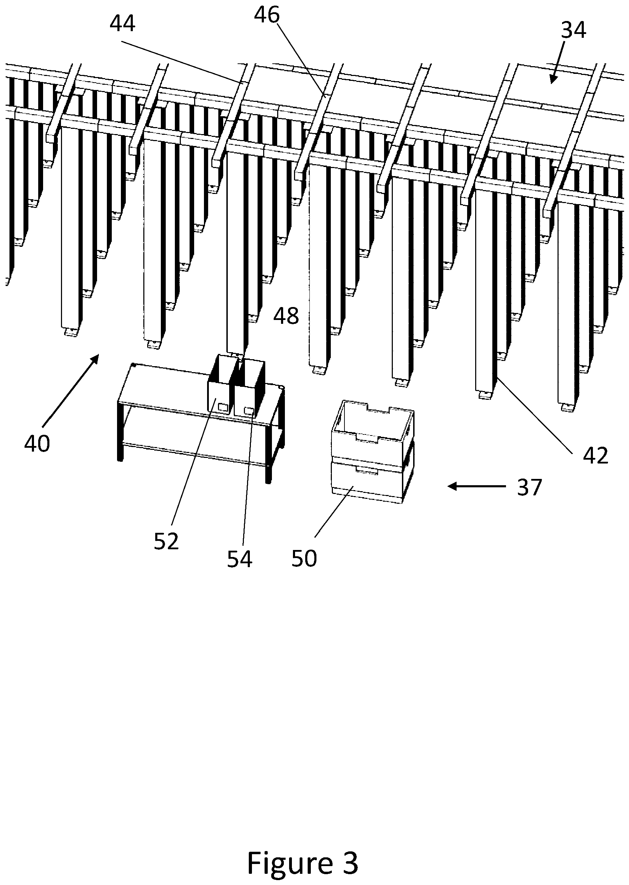

Positioning the plurality of lockers 12 in at least one external wall 14 of the fulfilment centre allows the chill or frozen environment in the fulfilment centre to cool the interior space of each of the plurality of lockers exposed at the second opening 26. Typically, fulfilment centres comprise one or more zones for the storage of stock comprising food and grocery commodities. Each of the one or more zones can represent a chilled zone, a frozen zone or an ambient controlled zone. Food and grocery commodities are stored in any one of the zones depending on their temperature storage requirements. A typical layout of the interior of a fulfilment centre 34 according to an embodiment of the present invention is shown in Figure 3.

As food and grocery commodities are perishable, one or more zones of the fulfilment centre 34 are maintained at strict chilled or frozen temperatures. For example, chillers are used to maintain the temperature inside one or more zones of the fulfilment centre 34 at the required storing temperature prior to being dispatched to the customer. The plurality of lockers 12 formed in at least one wall 14 of the fulfilment centre 34 are configured to maintain the temperature of the goods inside the fulfilment centre prior to collection. The plurality of lockers 12 in the at least one external wall 14 of the fulfilment centre 34 are arranged so that the second opening 26 at the back or rear side of each of the plurality of lockers 12 at the dispatch side 18 as shown in Figure 2 are exposed to the interior of the fulfilment centre 34. This is particularly the case, when the bi-directional roller shutter is moved across the first opening of at least one or more of the lockers at the collection side 16. Since the second opening 26 at the rear of the plurality of lockers 12 are exposed to the interior of the fulfilment centre 34, the temperature of the interior space of each of the lockers reaches an equilibrium state with the temperature inside the fulfilment centre 34. Thus, the temperature of the interior space of the lockers is dictated by the internal temperature of the fulfilment centre. Cool air from one or more chillers inside the fulfilment centre circulates through the exposed second opening 26 of each of the plurality of lockers causing the temperature inside the lockers to be kept to the same temperature inside the fulfilment centre 34.

For the storage of grocery at chilled temperature, exposure of the interior space of the lockers to the chilled conditions results in the interior space 28 of each of the plurality of lockers 12 reaching a chilled temperature as the temperature inside the lockers will reach an equilibrium state with the temperature inside the fulfilment centre. Similarly, if the plurality of lockers 12 are formed in an external wall 14 that represents part of the fulfilment centre that houses food and grocery commodities stored at a frozen temperature, exposure of the second opening 26 of the plurality of lockers 12 at the dispatch side 18 to the frozen conditions results in the interior space 28 of each of the plurality of lockers reaching the temperature inside the fulfilment centre, i.e. frozen temperature. The same principle applies if the plurality of lockers are formed in an external wall that represents part of the fulfilment centre that houses food and grocery commodities stored at an ambient controlled temperature.

Optionally, the door mechanism of at least one of the plurality of lockers 12 comprises an outer door 36 that is externally mounted at the first opening 24 at the collection side 16 of the lockers. As can be seen in Figure 1, the outer door 36 provides an additional barrier for entry into the interior space 28 of the lockers 12. The outer door 36 prevents unauthorised persons from gaining access to the less secure bi-directional roller shutter 30, i.e. provides a two stage entry into the lockers. Thus, entry into the lockers 12 at the collection side 16 requires a user which can include a courier to open the outer door 36 and then move the bi-directional roller shutter 30 to a positon to expose the first opening 24. The outer door 36 also helps insulate the interior space 28 of the lockers from the outside environment at the collection side 16 so as to maintain the temperature inside the lockers at the chilled or frozen temperature prior to collection. Preferably, the outer door 36 is lined with a thermally insulation material commonly known in the art. The outer door 36 can be pivotally mounted to the external wall 14 adjacent the first opening 24 or to at least one fascia of the locker by one or more hinges and is configured to open and close against the first opening 24 of the locker to cover bi-directional roller shutter 30. The one or more hinges can be spring loaded that biases the outer door 36 in the close configuration to prevent escape of cold air from the fulfilment centre.

Referring now to Figure 4(a) and 4(b) showing the operation of the bi-directional roller shutter of at least one of the plurality of lockers. As shown in Figure 4(a) and 4(b), the first opening 24 at the collection side 16 and the second opening 26 at the dispatch side 18 are at opposing ends of the interior space 28 of the locker 22. The bidirectional roller shutter 30 herein termed roller shutter is moveable from a first position as shown in Figure 4(a) to close the entry into the interior space 28 of the locker from the collection side 16 (i.e. the first opening 24) to a second position as shown in Figure 4(b) to close the entry into the interior space 28 of the locker from the dispatch side 18 (i.e. second opening 26). The roller shutter 30 comprises a shutter curtain that is guided along rails or guides (not shown) extending from the first opening 24 at the collection side to the second opening 26 at the dispatch side; preferably along a window frame (not shown) across the first opening, along a window frame (not shown) across the second opening 26 and across the interior space 28 therebetween. This allows the roller shutter 30 to be moveable across the first opening 24 to close the first opening at the collection side 16 and across the second opening to close the second opening 26 at the dispatch side in a single operation or movement. By extending the rail or guide across the interior space 28 of the locker, more specifically a top wall of the interior space of the locker, allows the roller shutter to be selectively positionable to close the first opening and the second opening at any one time in a single operation, i.e. the locker is only accessible from one side of the locker at a time. The arrows shown in Figure 4(a) and Figure 4(b) show the direction of the roller shutter 30 when closing the first opening 24 and the second opening 26. Thus in a single operation, movement of the roller shutter 30 to the first position closes the first opening 24 and exposes the second opening 26. When the plurality of lockers are formed in a structural wall of a fulfilment centre, closing the first opening 24 of at least one locker exposes the second opening 26 to the interior of the fulfilment centre. Likewise, moving the roller shutter 30 to the second position opens the first opening 24 but closes the second opening 26 in a single operation.

Movement of the roller shutter 30 can optionally be motorised so as to automatically move the roller shutter between the first position and the second positioned and vice versa. For example, one or more motors positioned latterly across the roller shutter can comprise one or more wheels (not shown) rotatably engageable with the surface of the shutter curtain to automatically move the roller shutter across the first opening and the second opening as the motor rotates. Rotation of the motor in one direction moves the roller shutter across the first opening 24 and rotation of the motor in the reverse direction moves the roller shutter across the second opening 26. The wheels of the motors can frictionally engage with the surface of the shutter curtain or alternatively or in combination, the wheels of the motors comprise teeth that mesh with the surface of the roller shutter so that rotation of the wheels selectively move the shutter curtain either across the first opening or the second opening depending on the direction of rotation of the motor.

As described above, the location of the lockers 12 forming an exterior wall 14 of the fulfilment centre 34 can be advantageous for controlling the temperature within the lockers. If the exterior wall 14 represents part of the fulfilment centre 34 that houses products stored at a chilled or frozen temperature, exposure of the second opening 26 of the plurality of lockers 12 at the dispatch side 18 to the air within the fulfilment centre results in the interior space 28 of each of the plurality of lockers reaching the temperature inside the fulfilment centre, i.e. cool enough to store chilled or frozen goods within the interior space 28 of the locker 22.

Optionally, one or more fans 23 can be used to direct the cool air from inside the fulfilment centre 34 into the interior spaces 28 of the lockers. Unlike traditional active cooling systems which use refrigeration units, the fans 23 help to cool the lockers by taking advantage of the already-cool air inside the fulfilment centre 34.

The fans 23 can be arranged horizontally or vertically, in such a way as to provide horizontal or vertical movement of the air. Vertical air distribution may be preferable, given that the air temperature and air density vary vertically.

To facilitate airflow between adjacent lockers, and between the interior spaces 28 of the lockers and the fulfilment centre, the lockers may be provided with perforations in one or more of the top, bottom, front, back, or side walls of the lockers.

One or more distribution channels or manifolds 27 may be provided, to guide the airflow into and/or out of the lockers.

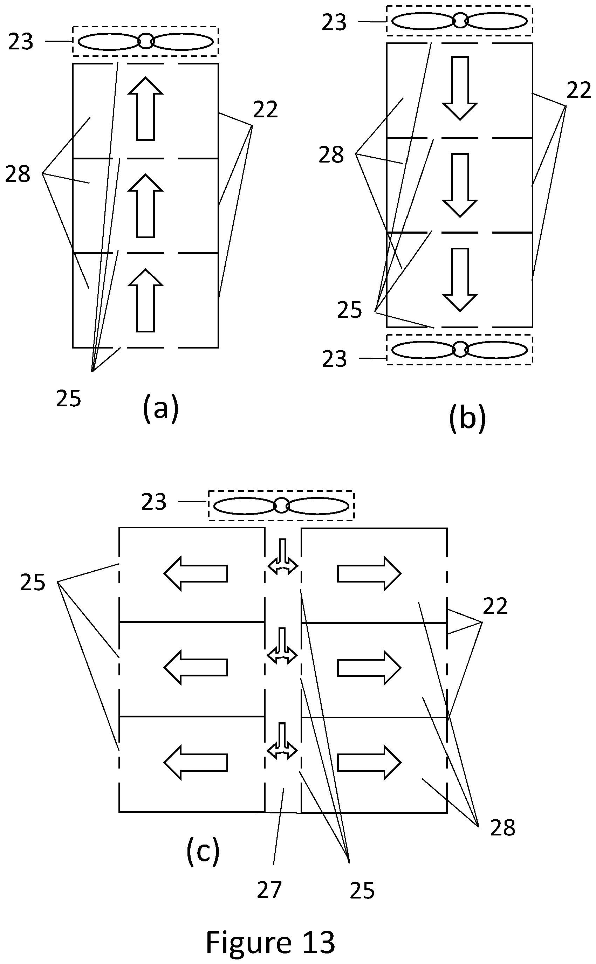

Figures 13(a), 13(b), and 13(c) illustrate some examples of arrangements of fans and perforations. These examples are not intended to be limiting; the skilled person will appreciate that other arrangements of fans are possible, and any appropriate arrangement may be used as part of the invention.

In Figure 13(a) a single fan 23 is positioned at the top of a bank of lockers. The fan acts as an extractor fan, and extracts the air from the interior spaces 28 of each locker 22. The lockers are each provided with perforations 25 in the top and bottom of each locker 22, to enable air flow. The perforations 25 at the top of each locker 22 act as an air outlet, and the perforations 25 at the bottom of each locker act as an air inlet. The direction of air flow is substantially upwards, as indicated by the direction of the arrows on Figure 13(a). As air is extracted from the interior spaces 28 by the fan 23, cool air from the fulfilment centre 34 is drawn upwards through the perforations in the bottom of each locker 22.

In Figure 13(b), a bank of lockers is provided with two fans 23, one at the top and one at the bottom of the bank of lockers. The first fan 23 at the top of the bank of lockers pushes cool air from the fulfilment centre 34 downwards into the interior spaces 28 of the lockers. The second fan 23 at the bottom of the bank of lockers acts as an extractor fan, drawing air downwards from within the interior spaces 28 of the lockers and out into the fulfilment centre 34. Again each individual locker 22 is provided with perforations 25 to enable the flow of air. The perforations 25 at the top of each locker 22 act as an air inlet, and the perforations 25 at the bottom of each locker act as an air outlet. The arrows in Figure 13(b) indicate that the direction of air flow is substantially downwards.

In Figure 13(c), a bank of lockers comprises two vertical stacks of lockers, and is provided with a fan 23 at the top. The fan 23 directs cool air into a common distribution system that is arranged to be in cooperation with the interior space of the bank of lockers. The distribution system comprises a manifold for distributing cool air amongst the bank of lockers. Cool air from the fulfilment centre 34 is directed downwards by the fan 23 into the manifold 27 between the two stacks of lockers. Each individual locker is provided with perforations 28 on two opposite sides of the locker 22. The perforations on the side of the locker adjacent to the manifold 27 act as air inlets, allowing cool air from the manifold to enter the interior space 28 of the locker. The perforations 25 on the side of the locker opposite to the side adjacent to the manifold act as air outlets, allowing air from the interior space 28 of the lockers to flow into the fulfilment centre. The arrows on Figure 13(c) indicate the direction of air flow: the air is pushed substantially downwards into the manifold 27 by the fan 23, and then flows substantially horizontally from the manifold into the lockers, and out of the lockers into the fulfilment centre.

Stale air inside each of the bank of lockers can be expelled to the exterior of the fulfilment centre. For example, stale air can be expelled from the interior space of each of the bank of lockers via one or more extractor fans and/or each time the exterior door is opened to expose the opening of the locker exterior of the fulfilment centre.

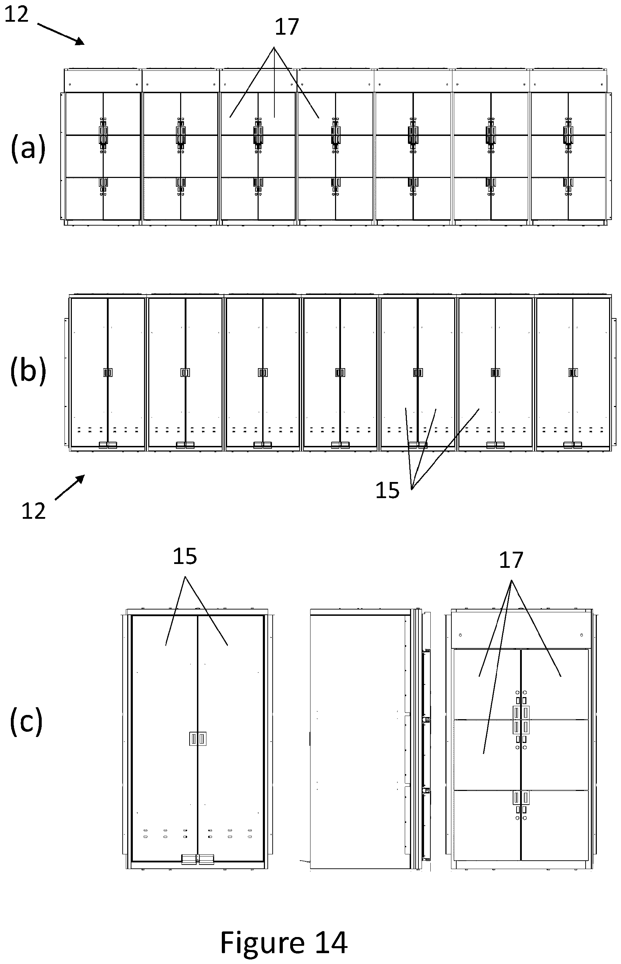

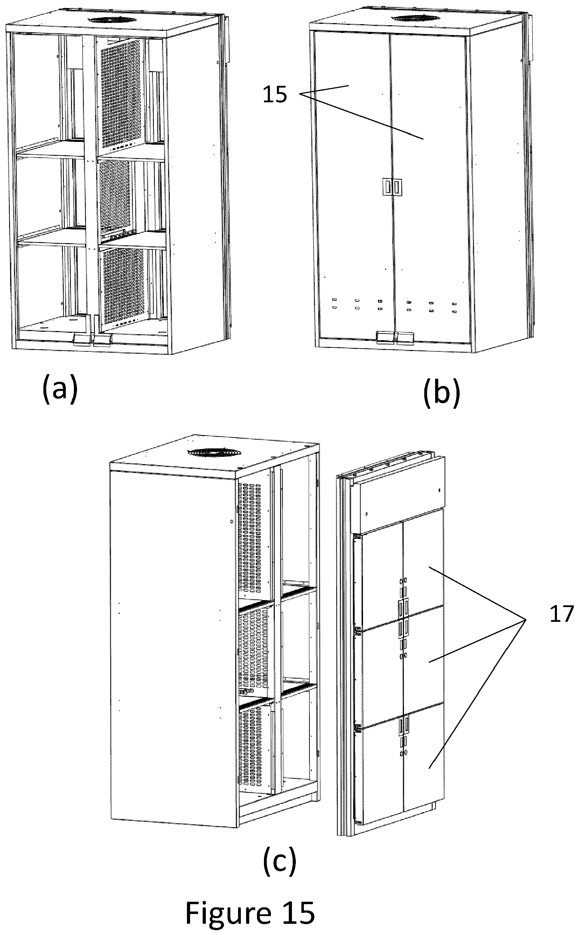

Figures 14(a), 14(b), 14(c), 15(a), 15(b), and 15(c) provide schematic views of an exemplary embodiment of the door mechanism for selectively closing the first and second opening of one or more of a plurality of lockers 12 according to the present invention.

In one example of the invention, the door mechanism comprises an exterior door 17 for closing the first opening(s) of one or more of the plurality of lockers exterior of the fulfilment centre 34, and an interior door 15 for closing the second opening(s) of one or more of the plurality of lockers from the interior of the fulfilment centre 34. Much like the functionality of the b-directional roller shutter discussed above, the locking mechanism selectively locks the exterior door 17 and the interior door 15 such that the exterior door 17 is locked when the interior door 15 is unlocked, and the interior door 15 is locked when the exterior door 17 is unlocked.

Each of the plurality of lockers may comprise a single interior door 15 and a single exterior door 17. That is, each individual locker in the plurality of lockers may have its own individual interior door and its own individual exterior door, and each interior or exterior door provides access to one locker. The interior door 15 provides access to the rear side or dispatch side 18 of the locker from the inside of the fulfilment centre 34, and the exterior door 17 provides access to the front side or collection side 16 of the locker from the outside of the fulfilment centre 34.

Alternatively, two or more of the plurality of lockers may be grouped into a sub-group of lockers 13. The sub-group of lockers 13 may comprise two or more lockers such that the exterior door and/or the interior door is a single door shared by the sub-group of the two or more lockers.

The sub-group of lockers 13 may have a single exterior door 17 shared by the sub-group of lockers and separate interior doors 15 for each locker. In this case, the shared exterior door 17 provides access to all of the lockers in the sub-group of lockers 13 from the outside of the fulfilment centre 34, and each of the interior doors 15 of each individual locker in the sub-group of lockers 13 provides access to one individual locker from the inside of the fulfilment centre 34.

An advantage of a sub-group of lockers 13 with a shared exterior door 17 is that a courier or customer collecting a single order or multiple orders that do not fit into a single locker can collect goods from multiple lockers without having to access each of the lockers separately. This is more convenient and faster than collecting the same goods from lockers with separate exterior doors.

Another example of a situation in which shared exterior doors could be convenient is when an order comprises items to be stored at different temperatures. For example, consider a sub-group of two lockers with separate interior doors 15 and a shared exterior door 17. If an order comprises frozen goods and items to be stored at ambient temperature, the ambient-temperature goods can be stored in the first locker and the frozen goods in the second locker. An operative in the fulfilment centre can place the ambient-temperature goods in the first locker

The sub-group of lockers 13 may have a single interior door 15 shared by the sub-group of lockers and separate exterior doors 17 for each locker. In this case, the shared interior door 15 provides access to all of the lockers in the sub-group of lockers 13 from the inside of the fulfilment centre 34, and each of the exterior doors 17 of each individual locker in the sub-group of lockers 13 provides access to one individual locker from the outside of the fulfilment centre 34. This arrangement is convenient for large orders that require multiple lockers; the operative inside the fulfilment centre 34 only needs to open the single interior door 15 once in order to access the lockers to put the items of the order in each of the lockers in the sub-group of lockers, rather than needing to open the interior door of each individual locker separately. This is more convenient and faster than placing the same goods in lockers with separate interior doors.

The sub-group of lockers 13 may have a single exterior door 17 and a single interior door 15 shared by the sub-group of lockers. In this case, the shared exterior door 17 provides access to all of the lockers in the sub-group of lockers 13 from the outside of the fulfilment centre 34, and the shared interior door 15 provides access to all of the lockers in the sub-group of lockers 13 from the inside of the fulfilment centre 34. This is more convenient and faster for both the operative inside the fulfilment centre 34 and the courier or customer outside the fulfilment centre 34.

Figure 14(a) is a schematic view from the exterior of a fulfilment centre 34 of a plurality of lockers 12 according to an embodiment of the present invention. Each individual locker of the plurality of lockers has a separate exterior door 17. Each exterior door 17 opens and closes the first opening of one locker and provides access to the interior space 28 of that locker. Figure 14(b) is a schematic view of the same plurality of lockers 12 from the interior of the fulfilment centre. Each interior door 15 is shared between a sub-group of three lockers, such that the interior door 15 opens and closes the second opening of the three lockers, and provides access to the interior spaces 28 of the three lockers in the subgroup of lockers.

Figure 14(c) is a schematic view of a bank of six lockers comprising two sub-groups of three lockers each. The bank of lockers is part of the plurality of lockers illustrated in Figure 14(a) and Figure 14(b). The bank of lockers has two interior doors 15, each shared between a sub-group of three lockers in the bank of six lockers, and six individual exterior doors 17, one for each of the six lockers in the bank of lockers.

Figure 15(a) shows the bank of six lockers from the interior of the fulfilment centre, with the interior doors 15 not pictured so that the interior spaces 28 of the six lockers in the bank of lockers can be seen. Figure 15(b) illustrates the bank of lockers with two interior doors 15, each providing access to a sub-group of three lockers. Figure 15(c) shows the same bank of lockers from a different angle, so the second openings and exterior doors 17 for each of the lockers can be seen. The interior and/or the exterior doors can be lined with insulation material so as to prevent the loss of heat from the interior of the fulfilment centre.

The rear side or back side 18 of the plurality of lockers 12 at the dispatch side is shown in Figure 2. The lockers 12 at the rear side extend outwardly into the area of the fulfilment centre so as to appear as a plurality of pigeon holes or recessed compartments for an operative to dispatch fulfilled orders into the lockers, i.e. the interior space 28 of the lockers 12 extend rearwardly into the fulfilment centre. In the particular embodiment shown in Figure 2, the bi-directional roller shutter of each of the lockers are positioned in the first position to expose the second opening 26 to the interior space of the fulfilment centre. The fulfilment centre typically includes a picking operation or station 37 where items or goods are retrieved or picked from an inventory (see Figure 3). In the particular embodiment of the present invention as shown in Figure 3, the fulfilment centre comprises a grid framework structure 40 comprising a plurality of upright members or upright columns 42 that support horizontal members 44 supporting tracks 46. The plurality of upright members 42 are arranged into a plurality of storage columns or grid columns 48 for the storage of one or more containers in a stack. Each of the containers 50 typically holds a plurality of product items (not shown), and the product items within a container 50 may be identical, or may be of different product types depending on the application. The bins or containers 50 are accessed by load handling devices (not shown) remotely operative on tracks located on the top of the grid framework structure 40. To fulfil an order for a given customer, goods or grocery entering the picking operation are placed in bags 52. A customer order may include one or more bags 52 depending on the shipment of the order. Each of the packages or bags 52 are identified by a characteristic associated with a given order. To identify each of the packages to a given order, a label 54 is printed bearing an identification associate with the order. The identification of the package 52 to an order can be encoded as a barcode, or a QR code or a RFID tag or some other coding means to identify the package to a given order. In use, an operative in the fulfilment centre scans the label 54 comprising an identification code on one or more packages for collection by a courier or customer. The identification code uniquely identifies the package 52 to a given order. The identification code is scanned at an interface, either directly or via a hand portable scanner with Bluetooth or other short range wireless link to the interface. The interface can be communicatively coupled to a control module via a network for processing and/or storage such that data concerning the identification of the packages is sent over the network. The network can be, for example, a local area network, a wide area network, a virtual private network, the Internet, an intranet, an extranet, a public switched telephone network, an infrared network, a wireless network and any combination thereof. Communications over the network use any of the communication protocols commonly known in the art and include but are not limited to Transmission Control Protocol/ Internet Protocol ("TCP/IP"), Open System Interconnection ("OSI"), File Transfer Protocol ("FTP"), Universal Plug and Play (UpnP"), Network File System ("NFS"), Common Internet File System ("CFIS") and AppleTalk. The identification of the packages are recorded and stored in a suitable storage device of the control module. The control module correlates the identification of the packages with a corresponding collection code used by a courier to gain access to a locker allocated the order. Further details of the acts or stages in the processing an order by the control module is discussed below.

Once an order is fulfilled, the packaged goods or even individual items representing fulfilled orders are transported to the rear of the lockers where a dispatcher or operative transfers the packaged orders to the lockers 12 allocated to a given courier or customer. Where two or more orders are due to be collected by the same courier or customer, the two or more orders can be placed in adjacent lockers. Grouping adjacent lockers together to the same courier or customer simplifies the collection of the packages in one area of the lockers. Like the identification of the packages, each of the lockers are identified by a label 56 (see Figure 2). The label 56 can be a physical label comprising an identification code, e.g. a barcode, QR code or an RFID tag or simply an alphanumeric code. The label 56 allows an operative to identify a locker 22 allocated to a given fulfilled order. For example, an operative scans the label 54 to identify the one or more packages and the label 56 on an allocated locker 22 to identify the allocated locker for storing the one or more packages 52. The identification of the packages and the identification of the allocated locker are stored in a memory storage device and communicated to the control module or control system. Like the identification of one or more packages, the identification code on the allocated locker is scanned at an interface, either directly or via a hand portable scanner with Bluetooth or other short range wireless link to the interface. The interface can be communicatively coupled to the control module via a network for processing and/or storage such that data concerning the identification of the packages and the lockers is sent over the network. The control module or control system correlates the identification of the one or more packages and the identification of the allocated locker to a corresponding collection code that is representative of a given order. For example, the identification of the allocated locker and/or the identification of the one or more packages unique to an order is correlated by assigning the identification of the allocated locker and/or the identification of the packages to a corresponding collection code, i.e. the collection code represents the master code for the order and everything related to the order are assigned to the collection code. The advantage of this mechanism is that the collection code does not necessary need to change and is unique to an order. Everything associated with the order is assigned to a unique collection code.

The control module is communicatively coupled to the access control module 32. Data related to the identification of locker and/or the identification of one or more packages unique to a given order is communicated over the network to the access control module 32 where it is stored in a suitable memory in the access control module for later retrieval during collection. The memory can be any storage device commonly known in the art and include but are not limited to a RAM, computer readable medium, magnetic storage medium, optical storage medium or other electronic storage medium which can be used to store data and accessed by the processor. Further detail of the processing steps in correlating the identification of the packages and the identification of the locker allocated to store the packages to a corresponding collection code is discussed below. For the purpose of explanation of the present invention, the physical aspects of the present invention will be discussed first.

The bi-directional roller shutter 30 and/or outer door 36 comprises a locking mechanism (not shown) to lock the roller shutter 30 in the first position at the collection side 16 and optionally in the second position 18 at the dispatch side whenever the roller shutter is moved across the first opening 24 or the second opening 26. The locking mechanism can be a solenoid operated deadbolt actuated by the access control module 32 whenever a collection code is entered into the access control module. The deadbolt is moveable between a locked position to lock the roller shutter 30 in the first position and an unlocked position to allow the roller shutter to be moveable. Since theft of the contents of the lockers is largely at the collection side 16 of the lockers 12, the locking mechanism is configured to lock the roller shutter 30 in the first position at the collection side 16. Where the locking mechanism comprises a solenoid operated deadlock, the deadlock is located at the collection side at the front of the locker. Providing the locking mechanism that separately locks the roller shutter at the second position at the dispatch side is not necessary as the fulfilled orders are dispatched into the second opening at the dispatch side. More importantly, it is necessary according to the present invention to keep the interior space 28 of the lockers 12 exposed to the inside area of the fulfilment centre 34 at the dispatch side 18 in order to ensure that the temperature inside the interior space 28 of the locker is at the same temperature as the temperature inside the fulfilment centre, e.g. chilled or frozen or ambient controlled temperature. As discussed above, the interior area of the fulfilment centre are kept cold, e.g. chilled or frozen temperature, by one or more chillers for the storage of good and grocery commodities. Cold air circulating within the fulfilment centre can be used to maintain the storage temperature of the interior space 28 within the lockers 12. When the locking mechanism is actuated to lock the roller shutter 30 in the first position at the collection side (front side), an operative or dispatcher within the fulfilment centre is thus prevented from moving the roller shutter 30 to the second position, i.e. close the second opening 26 at the dispatch side 18 and thereby, remove the ability of cold air within the fulfilment centre to circulate within the interior space 28 of the locker 22. This may result in the temperature inside the interior space 28 of the locker to rise above the temperature within the fulfilment centre as the first opening 24 is exposed to the external environment. In a worst case scenario, the rise in temperature in the lockers may cause perishable goods stored within the locker to perish before it is collected at the collection side 16. Moreover, having a locking mechanism that separately locks the roller shutter 30 at the first position and the second position complicates the locking mechanism whenever a customer or courier is required to collect goods at the collection side since a latching mechanism coupled between the locking mechanism at the front and rear of the locker is necessary to simultaneously actuate both locking mechanisms in order to gain access to the interior space of the locker.

Optionally, the locking mechanism can be a self-latching mechanical lock mechanism that is configured to automatically lock without command signals when the roller shutter 30 is moved to the first position at the collection side 16. An electromagnetic lock release mechanism can then be used to actuate release of the roller shutter 30 in response to a command signal, i.e. release of the self-latching mechanical lock mechanism. This is has the advantage of only having the need to have one command signal to actuate the locking mechanism, i.e. release of the self-latching mechanical lock mechanism. The locking mechanism can also be used to actuate release of the outer door 36 at the first opening 24 discussed above. The outer door 36 provides an additional insulation of the interior of the lockers from the external environment.

Each of the lockers 12 comprises one or sensors (not shown) that is configured to sense whether a package is disposed into or collected from a locker. The one or more sensors provide a signal to indicate whether a package has been disposed or collected from a given locker. The signal can be used to actuate movement of the bi-directional roller shutter and/or the locking mechanism. For example, the roller shutter can be motorised to automatically move to the first position at the collection side 16 or the second position at the dispatch side 18 and can be actuated to automatically move across the first opening 24 after a predetermined amount time has elapsed in response to the one or more sensors detecting the collection of one or more packages from a locker. Equally, the signal from the one or more sensors can be used to automatically lock or unlock the locking mechanism. For example, in response to sensing that one or more packages have been collected from an allocated locker, the locking mechanism can be instructed to lock the roller shutter after a predetermined amount of time has elapsed. Any sensor for sensing the presence of one or more packages in the lockers commonly known in the art is applicable in the present invention and includes but are not limited to a weight sensor, proximity sensor or a motion sensor or a light sensor. Signal from the one or more sensors can be sent to the access control module which can use the signal to control movement the bi-directional roller shutter and/or actuate the locking mechanism.

As discussed above, to gain entry into the lockers, an access code or a collection code is inputted into an input device via a local user interface communicatively coupled to the access control module 32. A collection code or access code is a code that is unique to an order and is communicated to the customer or courier when a request is made to collect fulfilled orders from the plurality of lockers at the fulfilment centre. In the particular embodiment of the present invention, the input device of the dispatch system 10 of the present invention comprises a first input device and a second input device 33, both the first input device and the second input device 33 are co-located with the plurality of lockers 12 in that they are located in close proximity to the plurality of lockers. The access control module 32 is instructed to process the collection code or access code and retrieve the corresponding identification of one or more packages ready for collection and the identification of one or more lockers allocated to store the one or more packages for dispatch to the courier or customer.

The first input device can be incorporated into the access control module 32 in the form of a local user interface. As shown in Figure 1, the first input device is co-located with the plurality of lockers 12 and is shared amongst the plurality of lockers, i.e. common amongst the plurality of the lockers. The first input device allows a user, e.g. a customer or courier, to check-in into the dispatch system 10 which initiates the processor in the access control module 32 that the customer or courier is ready to pick up his/her package from a locker allocated to the customer or courier. The first input device can be any device for inputting a collection or access code unique to an order and includes but are not limited to a barcode scanner, QR code scanner, RFID scanner, keyboard or a key pad to enter an alphanumeric code etc.

Following input of the collection or access code into the first input device, one or more processors of the access control module 32 compares the collection code with at least one of the collection codes stored in the memory. In an event that the collection code corresponds to at least one collection codes stored in the memory, the user is directed to one or more lockers allocated to the order. The first input device can also be used to provide a notification to an operative in the fulfilment centre that a customer or courier is ready to collect their order. For example, following inputting a collection code unique to an order into the first input device, an instruction can be communicated to an operative in the fulfilment centre to prepare and/or dispatch one or more packages allocated to the order into a locker and provide an identification of the allocated locker to the access control module 32. Some food or grocery commodities require special treatment which are not provided where the plurality of lockers are situated or not in close proximity to the plurality of lockers. For example, the plurality of lockers 12 can be located in the chilled temperature zone or area of the fulfilment centre and therefore, to fulfil the orders of goods that require storage at freezer temperature would require a dedicated freezer within the chilled temperature zone to store the frozen goods herein after called freezer order. The first input device can provide a notification to an operative in the fulfilment centre to transfer the freezer order to the dispatch side 18 of the plurality of lockers once the collection code or access code is input into the first input device. The second input device can then be used by the courier or the customer to gain entry into the locker allocated the freezer order. Having the first and second input device co-located at the plurality of lockers, greatly reduces the time taken to move a freezer order from the freezer to the dispatch side of the lockers and therefore, reduces the time the freezer order is stored in the locker at an elevated temperature fulfilling the strict regulations for the storage of frozen grocery at an elevated temperature. This allows a mixture of goods and grocery including chilled and frozen to be stored together in the same locker.

The access control module 32 can also comprise a guidance means operable by the access control module 32 to communicate a location of the one or more of the plurality of identified lockers allocated to customer or courier once the collection code is entered into the first input device. The guidance means can include an output device to display a visual/graphical guide showing one or more identified lockers allocated to a customer or courier or a textual guide to their allocated locker. This could be by visual means through an output display 58 incorporated with the access control module 32 or through hearing by means of one or more speakers. For example, the guidance means could be simple as displaying an alphanumeric character identifying a particular locker or each of the plurality of lockers may comprise a signalling means in the form of a light which illuminates to guide the customer or courier to their allocated locker. Alternatively or in addition to the access control module 32, the location of the allocated locker can be communicated to the customer or courier via their personal communication device, e.g. mobile phone or smart phone. The communication to the personal communication device can be via either far field or near field wireless communication protocol such as at least one of Bluetooth, Zigbee and/or the like or Wi-Fi emitters. The access control module 32 may also comprise a virtual assistant such as a chatbot system, to indicate the location of a locker allocated to an order. A chatbot system may comprise a downloadable personal communication device application to allow a user to conduct a conversation via auditory or textual means with a chatbot. The chatbot can indicate to the user the location of the locker allocated to an order. Optionally, each of the plurality of the lockers comprises an illumination device, e.g. an LED, and the guidance means is electrically coupled to the illumination device such that the guidance means illuminates one or more of the illumination devices to direct a user to one or more lockers allocated to the user. For example, a light source or LED is mounted adjacent to the first opening of each of the plurality of lockers. When a user such as a courier enters a collection code into the access control module, the access control module illuminates one or more of the lockers to direct the user to their allocated locker.

Following inputting the collection or access code into the first input device, the access control module 32 retrieves the identification of the locker and/or the identification of one or more packages unique to the collection code stored in the memory and processes the guidance means to direct the courier or customer to one or more lockers allocated to an order. At the allocated locker, the user is requested to input the collection or access code again into the second input device 33 co-located at the locker allocated to store the one or more packages unique to the order. For example, the second input device 33 can be mounted adjacent each of the plurality of lockers (see Figure 1). The dual input device provides an additional level of security to gain entry into a locker in order to retrieve one or more packages allocated to an order. The access control module 32 can compare the collection code inputted at the first input device and the second input device to determine if they correspond. In an event that they correspond, the access control module 32 allows entry into the locker by controlling actuation of the locking mechanism. In an event, that they do not corresponding, entry into the locker is denied.

A timer can be used to determine the time that has elapsed between input of the collection code into the first input device and subsequently into the second input device. This can be set to a predetermined time to prevent goods that require special treatment such as frozen goods are not left too long at an elevated temperature in the locker but sufficient to allow an operative in the fulfilment centre to prepare and/or move one or more freezer packages from the freezer to a locker allocated to the freezer order. If the predetermined time has elapsed after input of the collection code into the first input device, the access control module 32 sends a notification to an operative in the fulfilment centre to either remove one or more packages, particularly those packages that require special treatment from the locker and into an appropriate storage area, e.g. freezer. The chatbot system discussed above, can be used to interact with the user in order to determine the reason for the delay in inputting the collection code in the second input device. Like the first input device, the second input device for inputting a collection or access code unique to an order can include but are not limited to a barcode scanner, QR code scanner, RFID scanner, keyboard or a key pad to enter an alphanumeric code, etc.

In another aspect of the present invention, the collection code can be shared between the first input device and the second input device such that entry of the collection code is completed when a portion of the collection code is entered into the first input device and the other portion to complete the collection code is entered into the second input device.

Multiple first input devices and multiple second input devices may be provided, in order to permit multiple couriers to collect goods simultaneously.

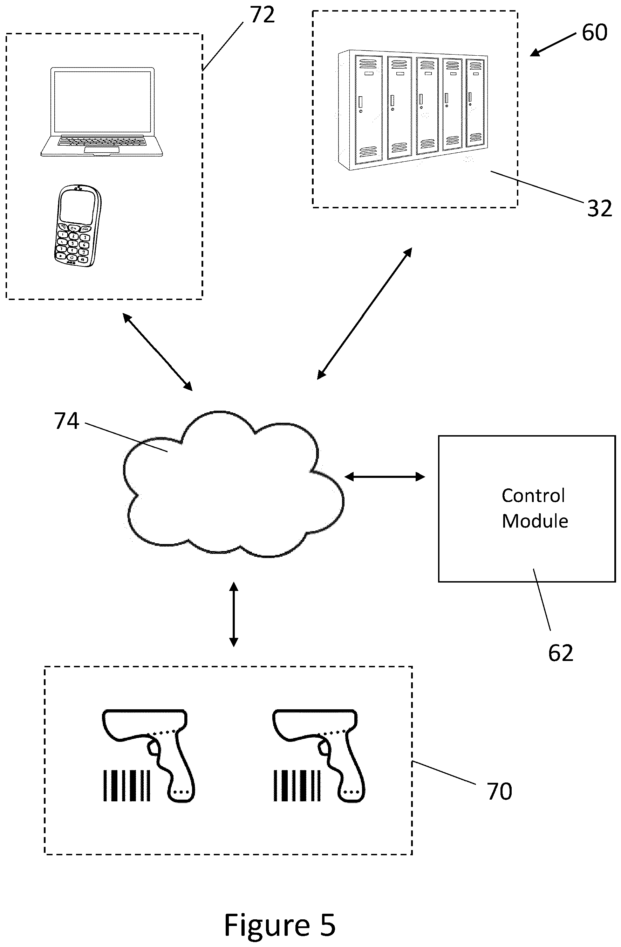

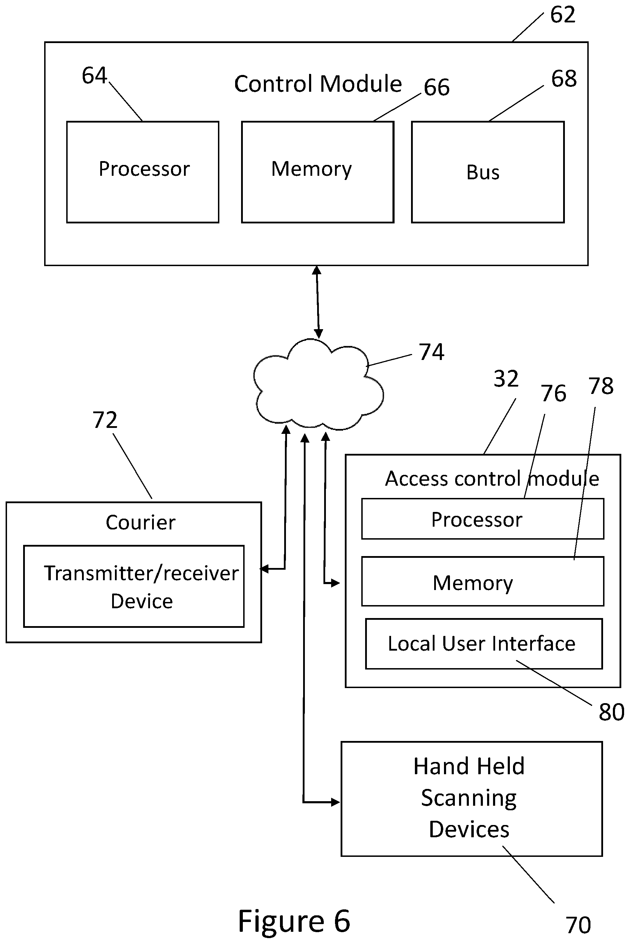

Figure 5 and 6 shows a schematic representation of the components of the dispatch system 60 according to an embodiment of the present invention. The control module 62 controls the operation of the dispatch system and comprises one or more processors 64, a memory 66 (e.g. read only memory and random access memory) and a communication bus 68. The control module 62 is communicatively coupled to the access control module 32, one or more scanning devices 70 and one or more personal communication devices 72 of a user, e.g. smart phone, tablet, smart watch, laptop, etc., via a communication network 74 over a wired or wireless transmitter/receiver (not shown). The communication network 74, for example, can be a local area network (LAN), a wide area network (WAN) or any other type of network. The one or more processors 64 of the control module 62 can execute instructions stored in the ROM and/or RAM to at least partially provide the functionality of the dispatch system described herein. The one or more processors 64 of the control module 62 are communicatively coupled to the wireless/wired transmitter receiver via the communication bus 68. The cloud (not shown) may form part of the control module 62 such that processing and storage of data can be carried out in the cloud. The control module 62 is instructed to execute instructions operable to receive an order for the delivery or shipment of one or more items or goods which can include food and grocery commodities and generate a collection code unique to that order which is communicated to a user's personal communication device over a wired/wireless network 74. The control module 62 is also instructed to correlate the identification of one or more lockers and/or one or more packages unique to an order to a corresponding collection code. For example, when a collection code is generated this together with the order is communicated to a system in the fulfilment centre which fulfils the order. Each time the order is fulfilled and the fulfilled order is allocated a locker, the identification of the locker and one or more packages of the order is assigned to the collection code. The correlation step is processed in the control module. Equally, applicable in the present invention is that the collection code is generated once the order is fulfilled and the identification of one or more lockers allocated the order and/or the identification of one or more packages of the order has been communicated to the control module such that one or more processors of the control module are instructed to correlate the identification of one or more lockers allocated the order and/or the identification of one or more packages of the order to a collection code for access to the order. The collection code is communicated to the access control module.

The access control module 32 co-located with the plurality of lockers comprises one or more processors 76, a memory 78 and a local user interface 80. The one or more processors 76 of the access control module 32 communicatively coupled to the control module 62 is instructed to receive data such as the collection code, the identification of one or more allocated lockers and/or the identification of one or more packages unique to an order and store the data in a memory 78, e.g. read-only memory (ROM) and/or random access memory (RAM) so as to provide functionality of the plurality of lockers. The one or more processors 76 of the access control module 32 is instructed to execute instructions operable to control the operation of the locking mechanism of the bi-directional roller shutter and/or the outer door in response to inputting a collection code into the local user interface 80. The collection code can be in the form of a barcode, e.g. 2D barcode, QR code, RFID tag and can be input into the access module by scanning the personal user device bearing the collection code against the local user interface.

When a collection code is input into the local user interface 80, the one or more processors 76 of the access control module 32 is instructed to compare the collection code with collection codes stored in the memory 78. In an event that the collection code corresponds with a collection code stored in the memory 78, the one or more processors 76 is instructed to retrieve the corresponding identification of the locker and/or identification of the one or more packaging of the order stored in the memory 78 and execute the guiding means to guide the user to their allocated locker. In response to inputting the collection code into the first input device of the local user interface 80, the one or more processors 76 of the access control module 32 is instructed to execute instructions to notify an operative in the fulfilment centre of the collection of a fulfilled order. This will enable an operative to prepare or fulfil an order and/or to transfer the order to a locker. For example, foods and grocery commodities that require special treatment, e.g. frozen goods, can be transferred from a freezer compartment where it is stored to an allocated locker. The identification of the locker and the packaging is communicated to the access control module 32 either directly and/or via the control module 62. The one or more processors 76 of the access control module 32 is instructed to receive the collection code from a second input device of the local user interface 80 and actuate the locking mechanism to the unlock position in response to the second inputted collection code matching the first inputted collected code. Equally, applicable in the present invention and for security, the collection code comprises a two-factor authentication method commonly known in the art, whereby entry into the locker is dependent on the user providing a combination of two factors via the local user interface. The two-factor authentication can be shared between the between the first input device and the second input device such that a first step verification is provided in the first input device and a second step verification is provided to the second input device. The two pieces of evidence can then be used to actuate the locking mechanism. For example, a portion of the collection code is input into the first input device. Thus, to complete entry of the collection code to authenticate the user, the remaining portion of the collection code is input into the second input device. The collection code may be an alphanumeric pattern that requires two entries to complete the collection code. Equally applicable in the present invention, is the verification of the user via the two-step authentication step can be provided separately or together into the first input device and/or the second input device.

Not shown in Figure 5 and 6, is the access control module is communicatively coupled to receive signals from one or more sensors in one or more of the plurality of lockers to sense whether one or more packages have been collected and/or deposited in the locker. The one or more sensors provide verification to the access control module that an order has been collected or deposited into an allocated locker. As discussed above, the signal from the one or more sensors can be used by the access control module to control the operation of the locking mechanism and/or the bi-directional roller shutter. For example, signals from the one or more sensors sent to the access control module can be used to instruct the bi-directional roller shutter to close after a predetermined amount of time has elapsed once an order has been collected from the locker. Movement of the bi-directional roller shutter can be motorised to selectively move across the first opening 24 in response to sensing that a package has been collected from a locker. This helps to insulate the inside of the fulfilment centre and thereby prevent escape of cold air out of the fulfilment centre. Equally applicable in the present invention is that the outer door is instructed to close against the first opening of the locker to provide additional insulation after a predetermined amount of time has elapsed once the sensors sense that the order has been collected from the lockers.

The one or more sensors can also be used to detect whether one or more packages have been abandoned in a locker. For example, if an order of one or more packages has not been collected from the locker after a predetermined amount of time has elapsed, the access control module is instructed to send a notice to an operative in the fulfilment centre to remove the one or more packages from the locker and return the items back to the inventory, so as to free up the locker to be used for other orders.

In addition to the one or more sensors, one or more of the lockers can comprise a camera to record the collection or deposit of one or more packages from a locker. The camera can provide still images or a video capture of the interior space 28 of the locker and can be actuated to record or take photographs of the interior of an allocated locker when the collection code is entered into either the first input device or the second input device. The images or video can be used as evidence should there be a dispute in the collection or deposit of one or more packages into a given locker, e.g. a dispute that one or more of the packages were missing from the order.

Also shown in Figures 5 and 6 are hand held scanning devices 70 for scanning a label to identify one or more packages of an order and a label to identify a locker allocated to store the packages of the order. Data corresponding to the identification of one or more packages of an order and the identification of the lockers allocated to the order can be transmitted via the communication network 74 to the control module 62 and/or the access control module 32. The identification of the packages of the order and the allocated lockers are stored in the memory device 66, e.g. RAM, in the control module 62. The one or more processors 64 of the control module 62 are instructed to correlate the identification of the lockers and/or the identification of the packages of an order to a corresponding collection code associated with the order. For example, data concerning the identification of the locker and/or identification of one or more packages of an order is matched with a corresponding collection code associated with the order in the control module. The collection code can be used to track the status of the order since the identification of the locker and the identification of the packages are correlated to the collection code. For example, when an order for one or more items has been placed, the control module 62 generates a collection code which is communicated to the access control module 32. The control module 32 is also instructed to communicate the order to a system in the fulfilment centre, which could be the access control module 32, for the order can be fulfilled. The identification of one or more lockers allocated to the order and/or the identification of one or more packages of the order are then correlated to the collection code by assigning the identification of one or more lockers allocated the order and/or the identification of one or more packages of the order to the collection code, i.e. the collection code is unique to the order. Equally applicable in the present invention is that the collection code is generated once the identification of one or more lockers allocated to the order and/or the identification of one or more packages of the order have been established and communicated to the control module 62. One or more processors 64 of the control module 62 are then instructed to correlate the identification of one or more lockers allocated to the order and/or the identification of one or more package of the order to a generated collection code which is communicated to the access control module 32. Once an order has been fulfilled and the packages of the order are allocated a locker, a courier can use the collection code to gain entry into the allocated locker and retrieve the order for delivery to a customer.

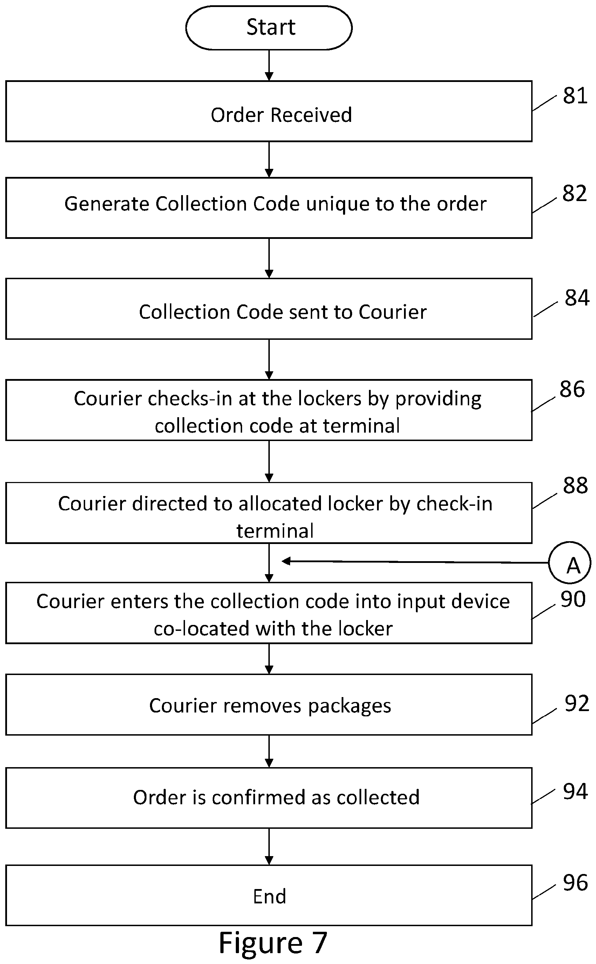

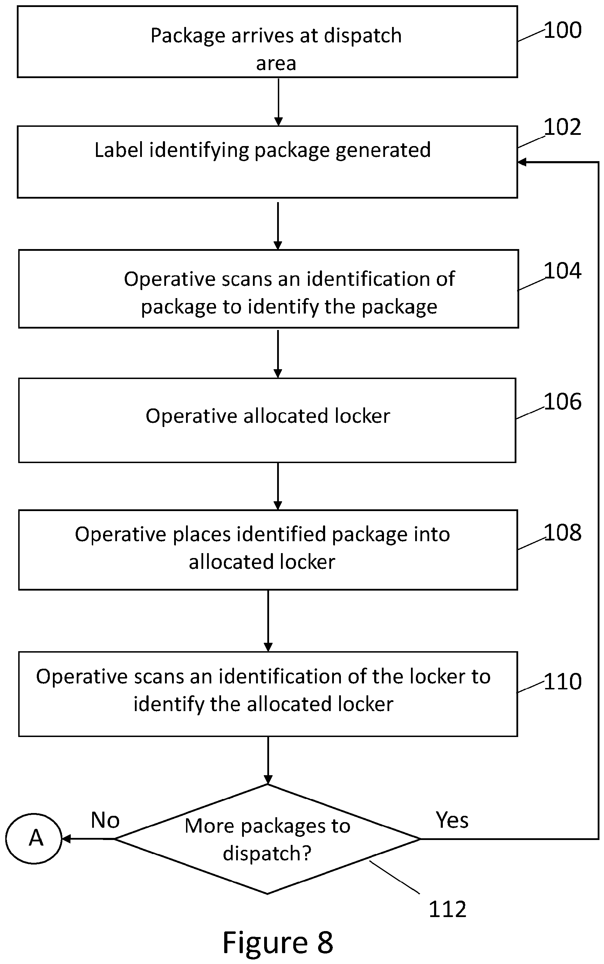

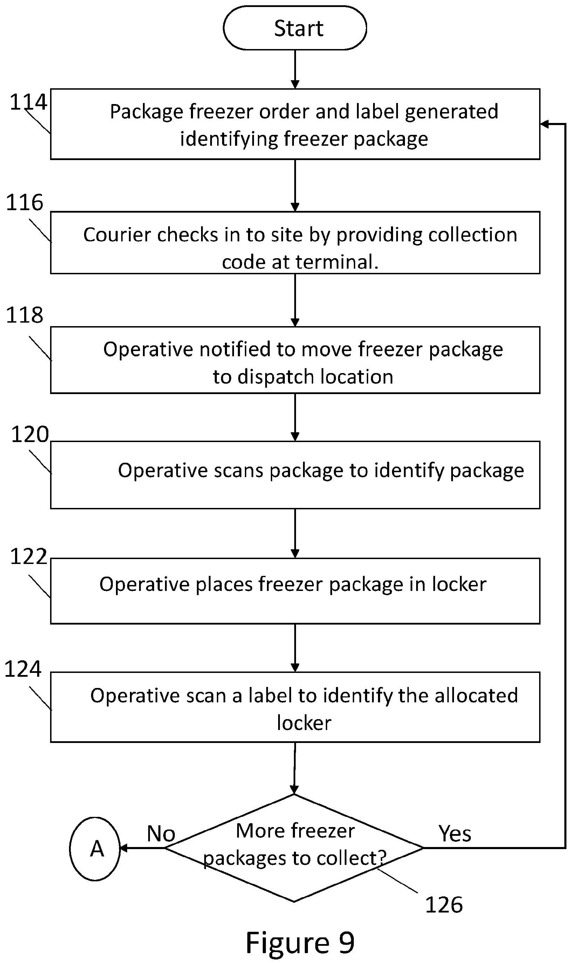

Figure 7 describes the steps in the collection of an order from an allocated locker in response to receiving an order from a customer and Figure 8 describes the steps in the fulfilment of an order and allocation of a locker for collection according to an embodiment of the present invention. Figure 9 provides a special case of processing steps where goods requiring special storage treatment different to the treatment in the area where the plurality of lockers are located. Some or all of the steps may be performed under the control of one or more processors in the control module and/or the access control module configured with executable instructions.

Referring now to Figure 7, the process starts with receiving an order 81 of one or more items or goods for delivery to a customer's premises, e.g. home delivery. The control module 62 registers the order and generates a collection code unique to the order 82. A request is made to make a home delivery to a courier and the collection code is communicated to the courier's personal device (transmitter/receiver device) 84. The courier is sent the delivery information which includes the customer's home address. The courier can track the status of the order as the identification of the locker and the identification of the fulfilled order are correlated to the collection code unique to the order. Once the order is fulfilled (see Figure 8) and when collecting the order for delivery, the courier checks in by entering the collection code unique to the order into the first input device 86 at a terminal shared amongst the plurality of lockers. Whilst Figure 7 shows that the collection code is initially generated once an order has been received, the collection code can be generated once the order has been fulfilled and a request is made to collect the fulfilled orders from an allocated locker.

Subsequent to entering the collection code, the access control module 32 is triggered to execute the guiding means to direct the courier to the locker allocated to the order 88. At the allocated locker, the courier is instructed to enter the collection code or at least a portion of the collection code to complete entry of the collection code into the second input device 90. In an event that the collection code matches or completes a pattern, the access control module is instructed to unlock the locking mechanism, whereupon the courier is able to move the bi-directional roller shutter to the second positon and collect the package from the allocated locker 92. The order is confirmed as collected 94 when the bi-directional roller shutter moves to the first position across the first opening to close entry into the locker at the collection side and thus, exposing the second opening 26 for the dispatch of another order. Closure of the bi-directional roller shutter can be done manually by the courier or automatically through a motorised system as discussed above. This then frees up the locker for another delivery.

The process of fulfilment of an order and allocation of a locker for collection is described below with reference to Figure 8. Contemporaneously or prior or even after the communication of the collection code to the courier, the order is prepared or fulfilled in the fulfilment centre, more specifically the picking area or dispatch area of the fulfilment centre, i.e. goods or items specified in the order are retrieved or "picked" from inventory and transported to the dispatch area 100. The goods or items specified in the order are packed into one or more bags herein termed packages 52 (see Figure 3). An operative in the fulfilment centre registers the one or more packages unique to an order by printing a label bearing an identification code and applying the printed label to the one or more packages 102. As discussed above, the identification code can be a barcode, e.g. 2D barcode, a QR code or a RFID tag that had been encoded with the goods or items specified in an order.

The operative registers the one or more packages unique to an order by scanning the identification code on the label using, e.g. a hand held scanner 104. Once registered, e.g. scanned, the fulfilled order is transported to the plurality of lockers where the operative allocates a locker to receive the order 106. Where orders are due to be collected by the same courier, the orders can be grouped into adjacent or neighbouring lockers so making collection of the orders easier. Equally, where the orders are destined to a person with a disability such as being confined to a wheelchair, the operative allocates one or more lockers at a level that is easily accessible by the person. The operative in the fulfilment centre places the identified package into the allocated locker 108 through the second opening 26 and registers the allocated locker by scanning an identification of the allocated locker, e.g. a label identifying the locker 110. As with the identification of the packages, each of the plurality of lockers bear an identification code in the form of a barcode, a QR code or a RFID tag. The order of the steps 108 and 110 can be reversed depending on whether the operative places the packaging into a locker 108 first and secondly, scans the label on the locker allocated the packaging 110 or scans the label on the locker 110 first and secondly places the packaging into the locker 108.

Data concerning the identity of the one or more packages and the identity of the allocated locker are communicated to a control module via the communication network where the data is correlated to their corresponding collection code or are used to generate a collection code to be communicated to a courier. In both case, the identity of the one or more packages and the identity of the allocated locker are correlated to a collection code.

The process is repeated for each package in a given order and/or packages of different orders 112. Once all of the available orders have been dispatched into their allocated lockers, the next stage will be collection of the fulfilled orders where a courier enters a collection code corresponding to a fulfilled order into the local user interface as discussed above with respect to Figure 7 (see point A). In the context of the present invention, the term "dispatch" is construed to mean the population or loading of the lockers with one or more packages associated with an order.

For goods or items specified in an order that requires special treatment (e.g. frozen) not provided in the area where the plurality of lockers are located, the dispatch system comprises a container controlled to store one or more packages at a temperature different to the temperature where the plurality of lockers are located in the fulfilment centre, e.g. a freezer. The dispatch system according to an embodiment of the present invention provides an additional facility to instruct an operative to move the items or goods requiring special treatment to one or more lockers once a courier checks in at the plurality of lockers for collection of the one or more packages, i.e. via the first input device. Goods or items that require special treatment are grouped together so that they are treated equally in the fulfilment centre, e.g. placed in a freezer. Figure 9 shows the steps in fulfilling and populating one or more lockers with a freezer order. Subject to the location of the plurality of lockers, the same principle applies to goods that need to be held at an ambient controlled temperature or chilled temperature. For example, where the plurality of lockers are located in the chilled zone of the fulfilment centre, goods that require special treatment will therefore be goods that are required to be stored at a frozen temperature and/or goods that are required to be stored at an ambient controlled temperature. For the purpose of goods comprising food and grocery commodities, the goods that require special treatment will depend on the location of the plurality of lockers for dispatch and whether the goods will perish in the environment where the plurality of lockers are located.

The process of fulfilment of an order and allocation of a locker for collection is described below with reference to Figure 9, for the specific case where the order includes frozen goods. The same step in packaging and identifying the packaging by means of scanning a label bearing an identification code 114 discussed above still applies. Once a freezer order is fulfilled, the identified packaging, herein defined freezer package, is placed into a freezer. The freezer is generally located in close proximity to the plurality of lockers so that when a courier checks in to the site of the plurality of lockers by providing a collection code at the local user interface (first input device) 116, the check-in triggers a notification to be sent to an operative in the fulfilment centre to move one or more packages unique to an order from the freezer where it is stored to the lockers 118. The operative scans the label on one or more freezer packages 120 and places the freezer package into a locker 122. The process of identifying the locker allocated to the freezer order and placing the freezer packages in the allocated locker to the store the freezer package before collection is the same as described above with reference to Figure 8, where the operative scans a label or tag on the locker 124 to identify the locker allocated the one or more freezer packages. The process step 112 shown in Figure 9 is repeated 126 for more freezer packages until all of the freezer packages ready for collection have been placed in one or more lockers.

The steps shown in Figures 8 and 9 can be combined so that an allocated locker can comprise a mixture of packaging, containing goods that require chilled and/or frozen temperature and/or goods at an ambient controlled temperature. Depending on the location of the plurality of lockers in the fulfilment centre, one or more of the plurality of lockers can initially be populated with one or more packages that are able to be stored in the lockers at the temperature of the locker environment. Subsequently, packages containing goods that require different treatment, e.g. a different temperature to that of the locker environment, can separately be added to the lockers when a notification is made to transfer the packages to the allocated lockers as discussed above. Since the local user interface is co-located with the plurality of lockers, the short time span between providing a notification between the first input device and the second input device and populating the locker with the goods that require special treatment such as frozen goods allows the goods to be kept fresh before they are collected from the lockers.

The process of allocating a locker into which an operative can place the package (step 106 in Figure 8) can be manual or automated. If the locker is manually allocated, the operative selects an available locker to allocate to the package. If the locker is automatically allocated, the control module 62 allocates a locker and instructs the operative to place the package in the locker.

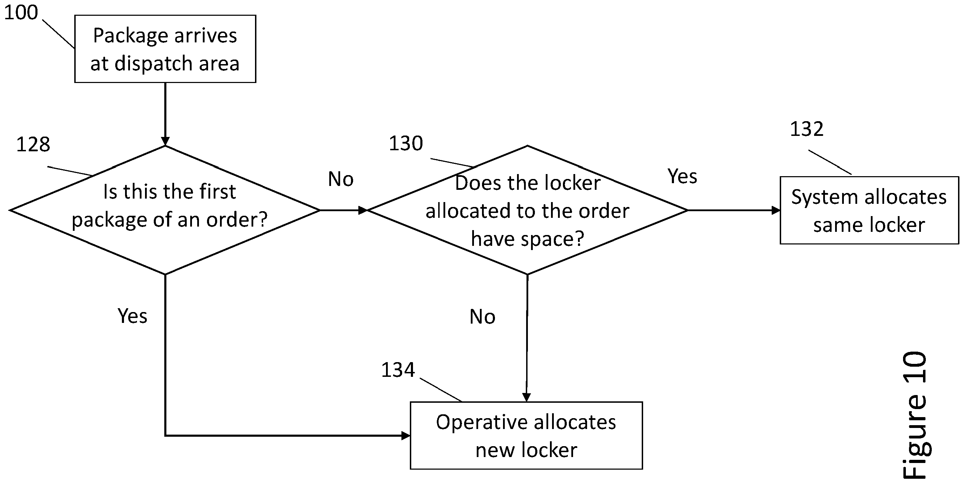

Figure 10 illustrates a process of manually allocating a locker. In step 100, a package arrives at the dispatch area, ready to be placed in a locker. In step 128 the control module 62 determines whether the package is the first package of an order, or whether the package belongs to an order that is partially fulfilled and one or more other packages belonging to the same order have already been placed in a locker. If the latter, in step 130 the control module determines whether the locker allocated to the order has sufficient space to accommodate the package alongside the one or more other packages of the same order, i.e. whether one or more packages of the same order can be grouped together. If the locker does have sufficient space, in step 132 the control module 62 allocates the same locker such that the packages share the same locker. The control module 62 instructs the operative to place the package in the allocated locker. The instruction can be delivered to the operative through the hand-held communication device 72.

If, however, the locker does not have sufficient space to accommodate the package alongside the one or more other packages of the same order, in step 134 the operative can manually allocate a locker. Once the locker has been selected by the operative, the operative can communicate the choice of allocated locker to the control module 62 via the hand-held communication device 72.

If in step 128 the control module 62 determines that the package is the first package of an order, again in step 134 the operative can manually allocate a locker. Again, once the locker has been selected by the operative, the operative can communicate the choice of allocated locker to the control module 62 via the hand-held communication device 72.

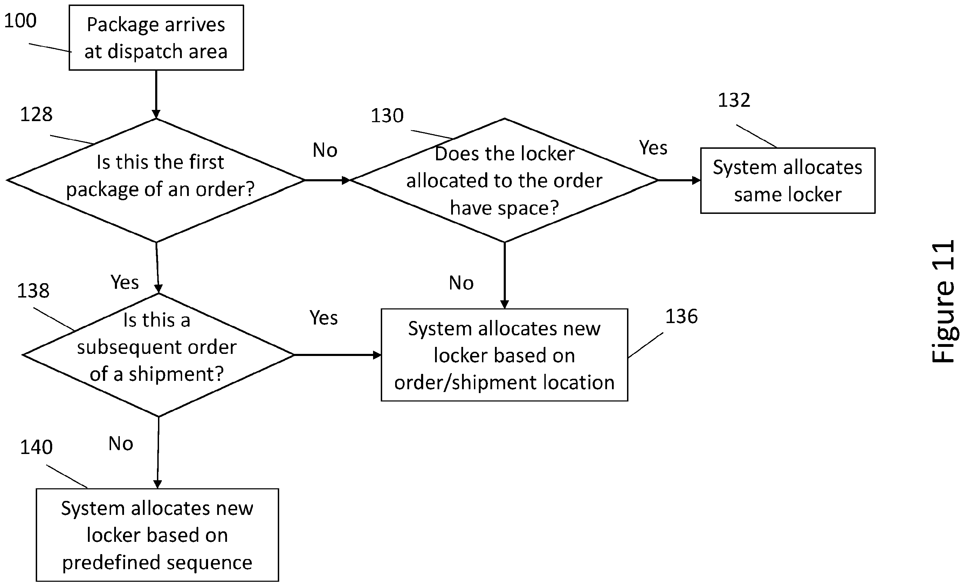

Figure 11 illustrates a process of automatically allocating a locker. Steps 100, 128, 130, and 132 are substantially the same as for the manual process described above with reference to Figure 10.

In the case where the package belongs to an order that is partially fulfilled and one or more other packages belonging to the same order have already been placed in a locker, if the locker does not have sufficient space to accommodate the package alongside the one or more other packages of the same order, in step 136 the control module 62 allocates a locker. This is in contrast to the manual allocation process described with reference to Figure 10; in the process of automatically allocating a locker it is the control module 62 which makes the decision as to which locker to allocate, rather than the operative (step 134 of Figure 10). The control module can allocate the locker based on information about the location of the one or more other packages belonging to the same order. For example, if there is a neighbouring locker or a locker available adjacent to one or more lockers containing the one or more other packages belonging to the same order, the control module may allocate this locker to the package. If an adjacent or neighbouring locker is not available, the control module may allocate another locker based on its proximity to the one or more lockers containing the one or more other packages belonging to the same order. Once the locker has been allocated by the control module, the control module instructs the operative to place the package in the locker. The control module 62 can communicate the instruction to the operative via the hand-held communication device 72.

If in step 128 the control module 62 determines that the package is the first package of an order, the control module 62 determines whether the order is a subsequent order of a shipment, i.e. whether the order is part of a larger shipment and one or more orders belonging to that shipment have already been placed in one or more lockers. For example, a shipment could comprise multiple orders with a common final destination, or multiple orders to be picked up by the same courier. It is advantageous for different orders forming the same shipment to be located close together. If the order is part of a shipment, in step 136 the control module can allocate a locker based on information about the location of one or more other orders belonging to the same shipment. As described above for different packages belonging to the same order, if there is a locker available adjacent to one or more lockers containing one or more other orders belonging to the same shipment, the control module may allocate this locker to the package. If an adjacent locker is not available, the control module may allocate another locker based on its proximity to the one or more lockers containing the one or more other orders belonging to the same shipment.

If at step 138 the control module determines that the order is not part of a shipment, then in step 140 the control module can allocate a locker based on a predefined sequence. For example, the sequence can be based on the lockers' location. The lockers can be numbered in sequential order starting from 1. A simple sequential allocation order can be used, in which the next available locker in the sequence is allocated: if locker number 1 is unavailable, the package can be allocated to locker number 2 if available, or if locker number 2 is unavailable the package can be allocated to locker number 3, etc. Thus the lowest-numbered available locker will be allocated.

Alternatively, in order to keep lockers adjacent to occupied lockers available for further packages belonging to the same order or further orders belonging to the same shipment, a sequential allocation based on multiples can be used. For example, the sequence can be based on multiples of ten. If locker number 10 is unavailable, the package can be allocated to locker number 20 if available, or if locker number 20 is unavailable the package can be allocated to locker number 30, etc. Thus the lowest-numbered available locker numbered with a multiple of ten will be allocated. The advantage of this kind of sequential allocation is that lockers proximal to occupied lockers are kept available for further packages that are part of the same order as the packages in the occupied lockers. Or if an order forms part of a larger shipment, the lockers proximal to the occupied locker that contains one or more packages for an order belonging to the shipment can be kept available. The choice of multiple will depend on the typical size of orders and shipments, and other multiples can be used, for example multiples of two or multiples of five.

A further alternative is to allocate the lockers separately for different couriers. For example, if the plurality of lockers comprises 100 lockers and serves two couriers with approximately equal volumes of goods to dispatch, lockers numbered 1-50 can be allocated to packages for the first courier and locker numbers 51-100 can be allocated to the second courier. If the first courier dispatches individual orders for home delivery to different addresses then a simple sequential allocation order could be used for lockers 1-50. If the second courier dispatches shipments of orders to different spokes for onwards distribution, then a multiple sequential order could be used for lockers 51-100 in multiples of 5, for example.

A predefined sequence for allocating lockers can also account for factors such as the size of the lockers and different requirements for temperature (e.g. chilled/ambient/frozen).

It will be appreciated that the examples described above are non-limiting examples of possible sequential allocations that could be used, and combinations of these and other sequential allocation methods are also within the scope of the invention.

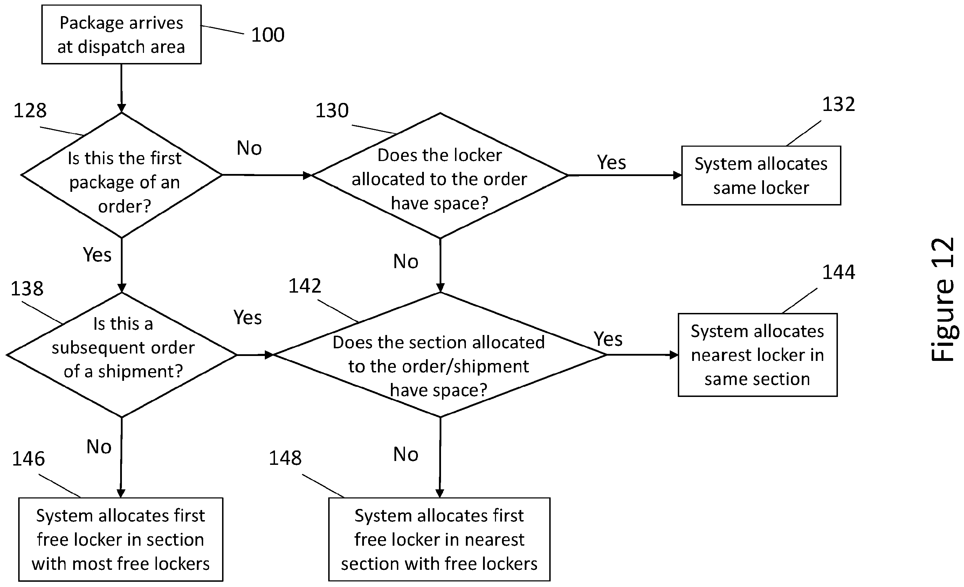

Figure 12 illustrates another example of a process of automatically allocating a locker. Steps 100, 128, 130, 132, and 138 are substantially the same as for the processes described above with reference to Figures 10 and 11. In this process, the lockers are divided into sections or subsets of lockers, with a plurality of lockers in each section. The sections of lockers can be the same as the sub-groups of lockers described above with reference to grouping lockers together to hold a single order, or with reference to a sub-group of lockers sharing an interior or exterior door, or the sections can be a different group of lockers. The sections can be determined by the physical arrangement of the lockers (e.g. a section can be one or more banks or rows or columns of lockers, or part of a bank or row or column of lockers, or a number of adjacent lockers). All of the sections may comprise the same number of lockers, or different sections may comprise different numbers of lockers. The purpose of defining sections of lockers is to facilitate the grouping of orders together in the locker allocation process. For example, a single order may comprise multiple packages that do not fit within a single locker, and it would be advantageous for multiple lockers containing different packages of the same order to be located close together in the same section. A shipment of different orders may be collected by the same courier or intended for the same destination, and in this case it would be advantageous for the lockers containing the different orders of the shipment to be located close together in the same section.

In the case where the package belongs to an order that is partially fulfilled and one or more other packages belonging to the same order have already been placed in a locker, if the locker does not have sufficient space to accommodate the package alongside the one or more other packages of the same order, in step 142 the control module 62 determines whether the section allocated to the order has sufficient space to accommodate the package.

If in step 128 the control module 62 determines that the package is the first package of an order, in step 138 the control module 62 determines whether the order is part of a larger shipment. If the order is part of a shipment, again in step 142 the control module 62 determines whether the section allocated to the shipment has sufficient space to accommodate the package.

In step 142, if the section does have sufficient space for the package, then in step 144 the control module 62 allocates the nearest locker in the same subsection containing the other packages belonging to the same order. In step 142, if the section does not have sufficient space for the package, then in step 148 the control module 62 identifies the closest section with available lockers, and allocates the first available locker in that section of lockers. This ensures that packages belonging to the same order and orders belonging to the same shipment are located as close together as possible.

If at step 138 the control module determines that the order is not part of a shipment, then in step 146 the control module 62 identifies the section of lockers with the greatest number of available lockers, and allocates the first locker in that section.

Once a locker has been allocated by the control module, the control module instructs the operative to place the package in the locker. The control module 62 can communicate the instruction to the operative via the hand-held communication device 72.

As part of the process of allocating a locker as described above in relation to Figures 10, 11, and 12, the control module 62 may need to be able to fulfil a range of control functions. For example, the control module may need to determine the availability of space within lockers, track which lockers are occupied, determine whether a package belongs to an order or a larger shipment, and determine which lockers are adjacent or located in close proximity. Some examples of how these aims may be achieved are described below.

A database 65 may be provided, containing information about the lockers. The information about each individual locker can include a unique identification code, whether the locker is occupied or unoccupied, which packages are currently located inside the locker, how much remaining space is available within a partially occupied locker, the size/dimensions/volume of the locker, the location of the locker (e.g. the row number and column number, or the distance of the locker from an origin or reference point), and other relevant information. A unique identification code that identifies each locker can be included on a label affixed to the locker, so that the locker can be identified by scanning the label.

The database 65 may also contain information about the packages located within the lockers, for example a unique identification code, size, weight, contents, and storage temperature requirements of each package, and the identification number of an order or a shipment to which the package belongs. A unique identification code that identifies each package can be included on the label affixed to the package, so that the package can be identified by scanning the label. The database can store associations between packages, for example, which packages belong to the same order or to the same shipment. An entry in the database for a package can store the identification numbers of other packages in the same order or in the same shipment.

The database 65 can also store the associations between lockers and packages, i.e. which packages are located inside which lockers: the database entry for each individual locker in the database can include a list of the unique identification codes of all the packages currently located inside that locker, and the database entry for each individual package in the database can store the unique identification code of the locker in which the package is located. When an operative places a package inside a locker, the operative can scan the identification label of the locker and of the package, in order for the control module 62 to associate the package identification code with the locker identification code and store this association in the database. Similarly, when a package is collected from a locker by a customer or courier, the customer or courier can scan the locker identification upon accessing the locker to remove the package, and the control module 62 can disassociate the package identification code from the locker identification code in the database 65. Whenever a package is placed inside or removed from a locker, the associations between packages and lockers in the database will be updated. The database 65 may be stored in the memory 66 of the dispatch system and accessed by the control module 62.

The database 65 can also store information relating to orders or shipments. Each order and each shipment can have an entry in the database 65. The database entry for an order can store information such as a unique order identification code for that order, the destination address for the order, the name or identification of the customer or courier who is to collect the order, the expected collection date and time, a list of package identification codes for the packages belonging to that order, an identification code for a shipment that the order is part of, and other relevant information. The order identification code for an order can be the same as the collection code described above. The database entry for a shipment can store information such as a unique shipment identification code for that shipment, the destination address for the shipment, the name or identification of the customer or courier who is to collect the shipment, the expected collection date and time, a list of order identification codes for the orders belonging to that shipment, and other relevant information.

The control module 62 can collate packages belonging to the same order by associating the order identification codes with the package identification codes. The control module 62 can collate all orders belonging to the same shipment by associating the shipment identification code with the order identification code(s) for one or more orders belonging to that shipment. In a similar way to the association of packages with lockers as described above, the control module 62 can associate orders and shipments with the lockers that contain packages belonging to that order or shipment. When a package belonging to an order or shipment is placed in a locker or collected from a locker, the associations in the database between the lockers and the orders and shipments will be updated, as described above in relation to the associations between packages and lockers. The database entry for each package in the database can store the order identification code and the shipment identification code to associate that package with the order and the shipment that the package is part of.

The control module 62 may need to determine the availability of space within a locker, in the case where one or more packages belonging to an order are already placed in a locker, and a further package belonging to the same order arrives at the dispatch area ready to be allocated to a locker. For example, an operative can scan a label or identification code unique to a locker, and the control module 62 can retrieve information about the dimensions of the locker, the packages currently placed in the locker, and the dimensions of these packages. From this information, the control module 62 can deduce the extent of the remaining available space in the locker, and determine whether the locker has sufficient available space to accommodate the further package awaiting dispatch, given information about the dimensions of the further package. If the locker does have sufficient space to accommodate the further package awaiting dispatch, the control module 62 can then send a signal to the operative via the hand-held device, instructing the operative to place the further package into the same locker. If the locker does not have sufficient space for the further package awaiting dispatch, the control module 62 can then allocate another locker.

Alternatively, in a more manual process the operative can determine whether the locker has sufficient space to accommodate the further package awaiting dispatch, and either place the package into the locker and send a communication signal via a handheld device to the control module 62 to confirm that the package is now located in the locker, or allocate another locker.

If the further package awaiting dispatch cannot be accommodated in the same locker as other packages belonging to the same order, the control module 62 may need to determine whether an adjacent locker or a nearby locker is available. The control module can determine whether two lockers are adjacent, for example whether a first locker containing one or more packages of an order is adjacent to a candidate locker for allocating the further package belonging to the same order or shipment, by retrieving the row and/or column number of the two lockers form the database 65. By comparing the row and column numbers, the control module 62 can determine whether the two lockers are adjacent - e.g. if the two lockers have the same row number and column numbers that differ by one, or the same column number and row numbers that differ by one, the two lockers may be adjacent. Alternatively, the database entry for each locker can store the identification codes of the lockers that are adjacent.

If the further package awaiting dispatch cannot be accommodated in the first locker containing one or more packages belonging to the same order or shipment, or in an adjacent locker, the control module 62 may need to identify a nearby non-adjacent locker that is available. The control module 62 can determine whether a candidate locker is located near to the first locker by retrieving from the database the location or position information for the two lockers and comparing them. For example the control module 62 may compare the row and column numbers of the two lockers, e.g. if the row numbers differ by one and the column numbers differ by one, the two lockers are diagonally adjacent and will therefore be located close together. This information can be combined with information about the dimensions of the lockers to calculate the distance between them. Alternatively the control module 62 may compare the location of the lockers as measured from an origin or reference point, in order to calculate the distance between the two lockers.

The control module 62 may need to determine whether a package awaiting dispatch is the first package of an order or shipment, or whether the package is a further package belonging to an order or a shipment comprising one or more packages that have already been placed in one or more lockers. This can be done by the control module 62 correlating the package awaiting dispatch with any packages previously allocated to lockers. The database entries for each package include the identification code of the order or shipment that the package belongs to, so it is possible for the control module to compare these codes and determine whether the package awaiting dispatch is associated with the same order or shipment identification code as one or more packages that are already allocated to lockers. If not, then the package awaiting dispatch is the first package in its order or shipment.

The process of allocating a locker as described above in relation to Figures 10, 11, and 12 is part of the process of fulfilment of an order. Other steps may be part of this process, but have not been included in Figures 10-12 for ease of illustration. For example, after a package arrives at the dispatch area, an identifying label is generated and attached to the package (step 102 of Figure 8), and the operative scans the label to identify the package (step 106 of Figure 8). After the process of allocating a locker is complete, the operative places the package into the allocated locker (step 108 of Figure 8) and scans an identification of the allocated locker (step 110 of Figure 8).

As part of the process for allocating a locker (any embodiment of this process, including the examples discussed above), packages that are part of the same order or orders that are part of the same shipment may be grouped together in a sub-group of lockers that are adjacent or located close together. This can be a single order comprising multiple packages that do not fit within a single locker, a shipment of different orders to be collected by the same courier or intended for the same destination,

It is advantageous for multiple lockers containing different packages of the same order or different orders of the same shipment to be located close together, because this saves time for the courier collecting the order(s). Instead of needing to collect from multiple lockers in different locations, all of the lockers are in the same location.

Another advantage of collating an order in a sub-group of lockers is that items at different temperatures can be included in the same order. For example, an order may comprise frozen goods, chilled goods, and goods at ambient temperature. A sub-group of lockers may comprise three lockers, the first containing frozen goods, the second containing chilled goods, and the third containing goods at ambient temperature. Each locker can be maintained at an appropriate temperature for storing the goods. A single interior door inside the fulfilment centre can be shared between the sub-group of three lockers. The single interior door can be used to open and close the second openings of the sub-group of lockers, allowing access to the interior spaces.

Also, lockers in the same sub-group as occupied lockers can be kept available for further packages that are part of the same order as the packages in the occupied lockers. Or if an order forms part of a larger shipment, the lockers in the same sub-group as the occupied locker that contains one or more packages for an order belonging to the shipment can be kept available. This provides space for co-locating orders as discussed above.

In the process of selecting a locker to allocate to a package, of course the selected locker must be available to be used. If the selection is a manual process (as described in Figure 10), the selection of an available locker must be done by an operative. This requires the operative to be able to determine whether or not a locker is available. Optionally, each individual locker may be provided with a status display located at or adjacent to the locker. The status display reports one or more indicators of the locker status to the operative.

The status display may be visible either from the dispatch side (visible to the operatives inside the fulfilment centre), or from the collection side (visible to couriers and customers outside the fulfilment centre), or visible from both the collection side and the dispatch side. The same status display may be visible from both the collection side and the dispatch side, or separate status displays may be provided at each side.

The status display can inform the operative and/or the courier which locker to use, and/or indicate yes/no availability of the locker, and/or include further information about the status of the locker.

As described above with reference to the guidance means described above, each of the plurality of the lockers may comprise an illumination device, e.g. an LED, and the guidance means may be electrically coupled to the illumination device such that the guidance means illuminates one or more of the illumination devices to direct a user to one or more lockers allocated to the user. The status display which indicates which locker to use may be the same as the illumination device for directing the user to an allocated locker, or may be a separate device. The guidance means may be located at the collection side to guide a customer or courier to one or more lockers containing one or more orders for collection, and/or the guidance means may be located at the dispatch side to guide an operative to one or more lockers. A single guidance means may be provided that is visible from both the collection side of the lockers (the exterior of the fulfilment centre) and the dispatch side of the lockers (the interior of the fulfilment centre).

For example, in a simple implementation the status display may indicate whether or not the locker is available for use. The status display may display text on a screen indicating whether the locker is available, or symbols (e.g. a tick for available, a cross for unavailable), or an LED (e.g. green for available, red for unavailable), or any other suitable indicator that can communicate the availability status of the locker to the operative.

The status display can indicate whether the locker contains packages or is empty. The status display can indicate whether the locker is already allocated to an order. For example, if there are multiple operatives simultaneously stocking the lockers with packages for dispatch, a locker may be allocated to an order but not yet contain packages.

The status display can indicate whether the packages contained within it are at ambient or chilled or frozen temperature.

The status display can indicate the temperature inside the locker. This could be a numerical display of temperature, or a graphic display. The status display can indicate whether the temperature inside the locker is within a permitted range. For example, the display could include an LED whose colour indicates whether the temperature is within the permitted range (e.g. green for within the permitted range, red for outside the permitted range). Thus if the locker is not within the permitted range (e.g. if a locker for frozen goods is at ambient temperature), the operative will know that the locker is unsuitable for storing frozen goods, and the control module will not allocate packages containing frozen goods to that locker.

A temperature sensor can be located in each individual locker, the locker only being available for use if the temperature within the locker as measured by the temperature sensor is within the permitted range.

The status display can indicate whether the interior door of the locker is open or closed, or locked or unlocked. The status display can indicate whether the exterior door is open or closed, or locked or unlocked.

The status display can indicate whether there is a problem with the locker. For example, the display could include an LED whose colour indicates whether there is a problem (e.g. red LED for problem). For example, the LED could indicate a problem if there is a mechanical issue with the locking mechanism, or if there has been a spillage and the locker needs to be cleaned before it can be used again.

As an alternative or addition to individual status displays for individual lockers, the status display for all of the lockers or for a subset of the lockers can be displayed on one screen. This can be the same as the user's hand-held device or on a separate display.

Status information about the lockers that is displayed on the status display can also be stored in the database. For example, the database may also store information about whether the locker is available, whether the locker is allocated to the next package awaiting dispatch, whether the locker contains packages or is empty, whether the packages stored in the locker are at ambient, chilled, or frozen temperature, the actual temperature of the locker, whether the interior door and/or exterior door are open or closed or locked or unlocked, and whether there is an issue with the locker that needs to be resolved before it can be used. The control module 62 can retrieve status information about a locker from the database and communicate this information to the locker's status display, so that the status display always has accurate and up-to-date information about the status of the locker.

The fulfilment centre 34 may also comprise a transfer system to transfer goods from the grid framework structure to the dispatch area. The transfer system may comprise a conveying means 35 which is configured to transport storage containers 50 from the grid framework structure to one or more pick stations 37, to transport the storage containers 50 from the one or more picking stations 37 to back to the grid framework structure, and to transport picked orders from the one or more picking stations 37 to the dispatch area. The conveying means may comprise one or more conveyor belts, forklift trucks or other vehicles, or any other suitable means. The transfer system may comprise separate conveying means to transport storage containers 50 from the grid framework structure to one or more pick stations 37, to transport the storage containers 50 from the one or more picking stations 37 to back to the grid framework structure, and to transport picked orders from the one or more picking stations 37 to the dispatch area, or the same conveying means may be used.

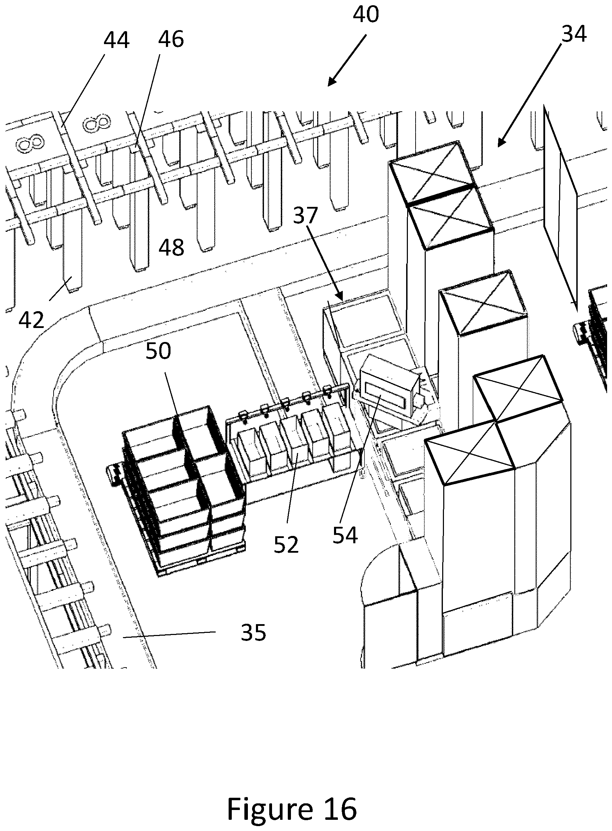

Figure 16 is a schematic view of a transfer system within a fulfilment centre 34. The grid framework structure 40 comprises storage columns or grid columns 48, in which stacks of storage containers 50 are stored. One or more load handling devices (not shown) may be configured to move on tracks 46 supported by horizontal grid members 44 on top of the grid framework structure. The horizontal grid members 44 are supported by upright members or upright columns 42. The load handling devices retrieve storage containers 50 from the grid framework structure 40 and transport them to access chutes (not shown). The storage containers 50 can then be transported to the one or more pick stations 37 by the conveyor means 35.

A pick station 37 is illustrated, showing storage containers 50 comprising items to be picked, packages or bag 52 for items belonging to an order to be picked into. The picking can be carried out by human operatives and/or by robotic pickers. Labels 54 may be applied to the packages at the picking station (as shown in Figure 16) or at the dispatch area.

The fulfilment centre 34 may comprise separate areas for the storage of chilled and/or frozen goods. The transfer system may comprise conveyor means 35 for transporting chilled and/or frozen goods to the picking stations 37 or to the dispatch area.

Whilst the particular embodiment of the present invention relates to the collection of ordered goods by courier or delivery companies for home delivery to a customer, the dispatch system of the present invention can also be applied for collection directly by customers once the customer receives the collection or access code to the access the lockers.

The advantage of the present invention is that is allows a pure online retailer to use various courier firms or delivery drivers to deliver ordered goods supplied by the online retailer. It also removes the need to have a dedicated service provider to populate the lockers at the front of the lockers and therefore streamlines the distribution chain from retailer to customer. Equally important is that the dispatch system of the present invention can make use of the storage conditions used to store inventory in a fulfilment or distribution centre to regulate the storing temperature in the lockers without the need to have a separate operation to keep the ordered goods or items fresh before collection. For example, the dispatch system of the present invention can make use of the chilled or frozen or ambient control conditions in the distribution centre to maintain the temperature inside the lockers prior to collection. Suitable insulation can be provided such as the outer door to prevent escape of cold air and/or the ingress of external conditions into the fulfilment centre and the interior space of the lockers.

Different combinations of the dispatch system described above are within the scope of the present invention as defined in the claims.

## Claims

1. A fulfilment centre (34) for fulfilling an order of one or more items, comprising:
i) a series of storage containers (50), each of the series of storage containers (50) for storing one or more items;
ii) a grid framework structure (40) for storage of the one or more storage containers (50) in a stack, said grid framework structure comprising a plurality of tracks arranged in a grid pattern to form a grid structure for one or more load handling devices to move on the grid structure and a plurality of vertical storage columns (48) configured to support the grid structure;
iii) a transfer system comprising conveying (35) means configured to transport storage containers (50) from the grid framework structure to a dispatch area of the fulfilment centre (34), where the one or more items are picked from the storage containers for subsequent transfer to a dispatch system, said dispatch system (10) comprising a plurality of lockers (12) mounted to at least one exterior wall (14) of the fulfilment centre (34), each locker of the plurality of lockers comprising an interior space (28) for storing one or more items, the interior space (28) being accessible through a first opening (24) exterior of the fulfilment centre and a second opening (26) interior of the fulfilment centre, each of the plurality of lockers comprising a temperature sensor for measuring the temperature inside a respective locker;
iv) a door mechanism operable to selectively close the first opening(s) of one or more of the plurality of lockers exterior of the fulfilment centre (34) and the second opening(s) of one or more of the plurality of lockers interior of the fulfilment centre; and
v) a locking mechanism configured to lock and unlock the door mechanism;
a) to prevent access to the interior space (28) of one or more of the plurality of lockers through the respective first opening but to permit access to the interior space (28) of one or more of the plurality of lockers through the respective second opening; and
b) to prevent access to the interior space (28) of one or more of the plurality of lockers through the respective second opening but to permit access to the interior space (28) of one or more of the plurality of lockers through the respective first opening;
iv) a status display located at or adjacent to each of the one or more of the plurality of lockers, said status display providing an indication of the status of a respective locker;
v) a control module (62) operatively coupled to a network comprising one or more processors (64) and memory (66) storing instructions that when executed by the one or more processors (64) cause the one or more processors (64), in response to a temperature from the temperature sensor from a respective locker, cause the status display to provide an indication of whether the temperature of the interior space of the respective locker is within a permitted range.

2. The fulfilment centre of claim 1, wherein the plurality of lockers is grouped into a sub-group of lockers, said sub-group of lockers comprising a first locker and a second locker, the first and second lockers being configured for storing one or more items at different temperatures.

3. The fulfilment centre (34) of claim 1 or 2, wherein the first opening (24) and the second opening (26) are at opposing ends of the interior space (28) of each locker of the sub-group of lockers.

4. The fulfilment centre (34) of any of the preceding claims, wherein the temperature of the interior (28) of the at least the portion of the fulfilment centre (34) is controllable to provide a chilled temperature or a frozen temperature and;
OPTIONALLY, the permitted range covers the frozen temperature covering a range between substantially -25°C to substantially 0°C.

5. The fulfilment centre (34) of claim 4, wherein the door mechanism is positioned such that the second opening (26) of one or more of the plurality of lockers (12) is exposed to the interior of the fulfilment centre until one or more items in one or more of the plurality of lockers (12) is collected.

6. The fulfilment centre (34) of any of the preceding claims, wherein at least a portion of the fulfilment centre comprises one or more chillers and wherein cool air from the one or more chillers circulates through the second opening 26 of one or more of the plurality of lockers causing the temperature inside the one or more of the plurality of lockers to be kept to the same temperature inside the fulfilment centre 34.

7. The fulfilment centre (34) of any of the preceding claims, wherein one or more of the plurality of lockers comprises one or more fans (23) for circulating cool air from the interior of the at least the portion of the fulfilment centre (34) to the interior space (28) of one or more of the plurality of lockers (12).

8. The fulfilment centre (34) of any of the preceding claims; further comprising:
i) an access control module (32) for controlling locking and/or unlocking of the locking mechanism to grant or deny access to the interior space (28) of one or more of the plurality of lockers (12);
ii) a local user interface (80) in cooperation with the access control module (32), wherein the control module (62) is configured to generate a collection code unique to an order of one or more items and communicate the collection code to the access control module (32);
iii) a data communication means in cooperation with the control module (62); said data communication means is adapted to receive the collection code from the control module such that when the collection code is subsequently entered into the local user interface (80), actuates the locking mechanism to permit access to the interior space of one or more of the plurality of lockers (12).

9. The fulfilment centre (34) of claim 8, wherein the local user interface (80) comprises a first input device (86) and a second input device (90) such that the access control module is configured to grant access to one or more of the plurality of lockers (12) by inputting the collection code into the first input device (86) and the second input device (90),
OPTIONALLY wherein the first input device is associated with a group of lockers (12) such that the first input device (90) is shared amongst the group of lockers (12) and the second input device (90) is associated with a sub-group of one or more lockers.

10. The fulfilment centre (34) of any of the claims 8 or 9, wherein the local user interface (80) comprises at least one of a keyboard, a Bluetooth receiver, an image scanner, a microphone, pointing device, a biometric input device, a face recognition device, an iris recognition device, a retina recognition device, a near field communication reader, a radio frequency identification reader, a linear and/or matrix barcode reader, a payment card reader, a smart card reader, an infra-red reader.

11. The fulfilment centre (34) of claim 8 to 10, wherein the access control module (32) comprises a guidance means to guide a user to one or more of the plurality of lockers (12) allocated to the user in response to the user inputting the collection code into the local user interface (80),
OPTIONALLY wherein the guidance means comprises an output device for communicating a location of one or more of the plurality of lockers allocated to the user.

12. A method of collecting one or more items from one or more lockers (12) of the fulfilment centre (34) of any of the claims 8 to 11 upon receipt of an order of the one or more items, comprising the steps of:
i) by the control module (62), generating a collection code upon receipt of the order of the one or more items,
ii) establishing a communication between the control module (62) and the access control module (32), and communicating the collection code to the access control module (32);
iii) by the access control module (32), actuating the locking mechanism to permit collection of the one or more items from the one or more lockers (12) upon receipt of the collection code; and
OPTIONALLY
iv) by the control module (62), communicating the collection code to the data communication means.

13. The method of claim 12, further comprising the steps of:
v) inputting the collection code to the access control module (32) via the local user interface (80),
vi) comparing the collection code with at least one of the collection codes stored in the access control module (32),
vii) in an event that the collection code corresponds to at least one collection codes stored in the access control module (32), actuating the locking mechanism to permit access to the interior space (28) of the one or more lockers storing one or more items of the order.

14. A method of dispatching one or more items to one or more lockers (12) of a fulfilment centre (34) according to any of the claims 8 to 11 upon receipt of an order of one or more items, comprising the steps of:
i) identifying one or more lockers allocated for the storage of the one or more of the items unique to the order;
ii) communicating the identification of the allocated locker to the control module (62);
iii) by the control module (62), correlating the identification of the allocated locker to a collection code unique to the order; and
OPTIONALLY
iv) identifying one or more items;
vii) communicating the identification of the one or more items to the control module (62);
viii) by the control module (62), correlating the identification of the one or more items to the collection code unique to the order.

15. The method of claim 14, wherein at least one item is stored in a freezer and the method further comprises the steps of:
ix) transporting the at least one item from the freezer to the one or more of the lockers (12) in response to the input of the collection code to the first input device.

## Patentansprüche

1. Abwicklungszentrum (34) zum Abwickeln einer Bestellung eines oder mehrerer Gegenstände, umfassend:
i) eine Reihe von Lagerbehältern (50), wobei jeder der Reihe von Lagerbehältern (50) zum Lagern von einem oder mehreren Gegenständen dient;
ii) eine Gitterrahmenstruktur (40) zum Lagern des einen oder der mehreren Lagerbehälter (50) in einem Stapel, wobei die Gitterrahmenstruktur eine Vielzahl von Bahnen, die in einem Gittermuster angeordnet sind, um eine Gitterstruktur für eine oder mehrere Lasthandhabungsvorrichtungen zu bilden, um sich auf der Gitterstruktur zu bewegen, und eine Vielzahl von vertikalen Lagersäulen (48) umfasst, die konfiguriert sind, um die Gitterstruktur zu tragen;
iii) ein Transfersystem, das Fördermittel (35) umfasst, die konfiguriert sind, um Lagerbehälter (50) von der Gitterrahmenstruktur zu einem Abgabebereich des Abwicklungszentrums (34) zu transportieren, wo der eine oder die mehreren Gegenstände aus den Lagerbehältern für einen nachfolgenden Transfer zu einem Abgabesystem kommissioniert werden, wobei das Abgabesystem (10) eine Vielzahl von Schließfächern (12) umfasst, die an mindestens einer Außenwand (14) des Abwicklungszentrums (34) montiert sind, wobei jedes Schließfach der Vielzahl von Schließfächern einen Innenraum (28) zum Lagern eines oder mehrerer Gegenstände umfasst, wobei der Innenraum (28) durch eine erste Öffnung (24) außerhalb des Abwicklungszentrums und eine zweite Öffnung (26) innerhalb des Abwicklungszentrums zugänglich ist, wobei jedes der Vielzahl von Schließfächern einen Temperatursensor zum Messen der Temperatur innerhalb eines jeweiligen Schließfachs umfasst;
iv) einen Türmechanismus, der betreibbar ist, um die erste(n) Öffnung(en) von einem oder mehreren der Vielzahl von Schließfächern außerhalb des Abwicklungszentrums (34) und die zweite(n) Öffnung(en) von einem oder mehreren der Vielzahl von Schließfächern innerhalb des Abwicklungszentrums selektiv zu schließen; und
v) einen Verriegelungsmechanismus, der konfiguriert ist, um den Türmechanismus zu verriegeln und zu entriegeln;
a) um einen Zugang zu dem Innenraum (28) von einem oder mehreren der Vielzahl von Schließfächern durch die jeweilige erste Öffnung zu verhindern, aber einen Zugang zu dem Innenraum (28) von einem oder mehreren der Vielzahl von Schließfächern durch die jeweilige zweite Öffnung zuzulassen; und
b) um einen Zugang zu dem Innenraum (28) von einem oder mehreren der Vielzahl von Schließfächern durch die jeweilige zweite Öffnung zu verhindern, aber einen Zugang zu dem Innenraum (28) von einem oder mehreren der Vielzahl von Schließfächern durch die jeweilige erste Öffnung zuzulassen;
iv) eine Statusanzeige, die sich an oder benachbart zu jedem des einen oder der mehreren der Vielzahl von Schließfächern befindet, wobei die Statusanzeige eine Angabe des Status eines jeweiligen Schließfachs bereitstellt;
v) ein Steuermodul (62), das funktional mit einem Netzwerk gekoppelt ist, das einen oder mehrere Prozessoren (64) und einen Speicher (66) umfasst, der Anweisungen speichert, die, wenn sie von dem einen oder den mehreren Prozessoren (64) ausgeführt werden, den einen oder die mehreren Prozessoren (64) veranlassen, als Reaktion auf eine Temperatur von dem Temperatursensor von einem jeweiligen Schließfach die Statusanzeige zu veranlassen, eine Angabe bereitzustellen, ob die Temperatur des Innenraums des jeweiligen Schließfachs innerhalb eines zulässigen Bereichs liegt.

2. Abwicklungszentrum nach Anspruch 1, wobei die Vielzahl von Schließfächern in eine Untergruppe von Schließfächern gruppiert ist, wobei die Untergruppe von Schließfächern ein erstes Schließfach und ein zweites Schließfach umfasst, wobei das erste und das zweite Schließfach zum Lagern von einem oder mehreren Gegenständen bei unterschiedlichen Temperaturen konfiguriert sind.

3. Abwicklungszentrum (34) nach einem der Ansprüche 1 oder 2, wobei sich die erste Öffnung (24) und die zweite Öffnung (26) an gegenüberliegenden Enden des Innenraums (28) jedes Schließfachs der Untergruppe von Schließfächern befinden.

4. Abwicklungszentrum (34) nach einem der vorhergehenden Ansprüche, wobei die Temperatur des Innenraums (28) des mindestens einen Abschnitts des Abwicklungszentrums (34) steuerbar ist, um eine Kühltemperatur oder eine Gefriertemperatur bereitzustellen, und
wobei OPTIONAL der zulässige Bereich die Gefriertemperatur abdeckt, die einen Bereich zwischen im Wesentlichen -25 °C bis im Wesentlichen 0 °C abdeckt.

5. Abwicklungszentrum (34) nach Anspruch 4, wobei der Türmechanismus so positioniert ist, dass die zweite Öffnung (26) von einem oder mehreren der Vielzahl von Schließfächern (12) dem Inneren des Abwicklungszentrums ausgesetzt ist, bis ein oder mehrere Gegenstände in einem oder mehreren der Vielzahl von Schließfächern (12) gesammelt sind.

6. Abwicklungszentrum (34) nach einem der vorhergehenden Ansprüche, wobei mindestens ein Abschnitt des Abwicklungszentrums ein oder mehrere Kühleinrichtungen umfasst und wobei Kühlluft von der einen oder den mehreren Kühleinrichtungen durch die zweite Öffnung (26) von einem oder mehreren der Vielzahl von Schließfächern zirkuliert, was bewirkt, dass die Temperatur innerhalb des einen oder der mehreren der Vielzahl von Schließfächern innerhalb des Abwicklungszentrums (34) auf der gleichen Temperatur gehalten wird.

7. Abwicklungszentrum (34) nach einem der vorhergehenden Ansprüche, wobei eines oder mehrere der Vielzahl von Schließfächern ein oder mehrere Gebläse (23) zum Zirkulieren von Kühlluft von dem Inneren des mindestens einen Abschnitts des Abwicklungszentrums (34) zu dem Innenraum (28) von einem oder mehreren der Vielzahl von Schließfächern (12) umfasst.

8. Abwicklungszentrum (34) nach einem der vorhergehenden Ansprüche;
ferner umfassend:
i) ein Zugangssteuermodul (32) zum Steuern des Verriegelns und/oder Entriegelns des Verriegelungsmechanismus, um einen Zugang zu dem Innenraum (28) von einem oder mehreren der Vielzahl von Schließfächern (12) zu gewähren oder zu verweigern;
ii) eine lokale Benutzerschnittstelle (80) in Zusammenwirken mit dem Zugangssteuermodul (32), wobei das Steuermodul (62) konfiguriert ist, um einen Sammelcode zu erzeugen, der für eine Bestellung von einem oder mehreren Gegenständen eindeutig ist, und den Sammelcode an das Zugangssteuermodul (32) zu kommunizieren;
iii) ein Datenkommunikationsmittel in Zusammenwirken mit dem Steuermodul (62); wobei das Datenkommunikationsmittel angepasst ist, um den Sammelcode von dem Steuermodul zu empfangen, sodass, wenn der Sammelcode anschließend in die lokale Benutzerschnittstelle (80) eingegeben wird, der Verriegelungsmechanismus betätigt wird, um einen Zugang zu dem Innenraum von einem oder mehreren der Vielzahl von Schließfächern (12) zuzulassen.

9. Abwicklungszentrum (34) nach Anspruch 8, wobei die lokale Benutzerschnittstelle (80) eine erste Eingabevorrichtung (86) und eine zweite Eingabevorrichtung (90) umfasst, sodass das Zugangssteuermodul konfiguriert ist, um einen Zugang zu einem oder mehreren der Vielzahl von Schließfächern (12) durch Eingeben des Sammelcodes in die erste Eingabevorrichtung (86) und die zweite Eingabevorrichtung (90) zu gewähren,
wobei OPTIONAL die erste Eingabevorrichtung einer Gruppe von Schließfächern (12) zugeordnet ist, sodass die erste Eingabevorrichtung (90) von der Gruppe von Schließfächern (12) gemeinsam genutzt wird und die zweite Eingabevorrichtung (90) einer Untergruppe von einem oder mehreren Schließfächern zugeordnet ist.

10. Abwicklungszentrum (34) nach einem der Ansprüche 8 oder 9, wobei die lokale Benutzerschnittstelle (80) mindestens eines von einer Tastatur, einem Bluetooth-Empfänger, einem Bildscanner, einem Mikrofon, einer Zeigevorrichtung, einer biometrischen Eingabevorrichtung, einer Gesichtserkennungsvorrichtung, einer Iriserkennungsvorrichtung, einer Netzhauterkennungsvorrichtung, einem Nahfeldkommunikations-Lesegerät, einem Radiofrequenzidentifikations-Lesegerät, einem Linear- und/oder Matrix-Strichcode-Lesegerät, einem Zahlungskartenlesegerät, einem Smartcard-Lesegerät, einem Infrarot-Lesegerät umfasst.

11. Abwicklungszentrum (34) nach einem der Ansprüche 8 bis 10, wobei das Zugangssteuermodul (32) ein Führungsmittel umfasst, um einen Benutzer zu einem oder mehreren der Vielzahl von Schließfächern (12), die dem Benutzer zugeordnet sind, als Reaktion darauf zu führen, dass der Benutzer den Sammelcode in die lokale Benutzerschnittstelle (80) eingibt, wobei OPTIONAL das Führungsmittel eine Ausgabevorrichtung zum Kommunizieren eines Ortes von einem oder mehreren der Vielzahl von Schließfächern umfasst, die dem Benutzer zugeordnet sind.

12. Verfahren zum Sammeln von einem oder mehreren Gegenständen aus einem oder mehreren Schließfächern (12) des Abwicklungszentrums (34) nach einem der Ansprüche 8 bis 11 bei Empfang einer Bestellung des einen oder der mehreren Gegenstände, umfassend die Schritte:
i) Erzeugen eines Sammelcodes durch das Steuermodul (62) bei Empfang der Bestellung des einen oder der mehreren Gegenstände,
ii) Herstellen einer Kommunikation zwischen dem Steuermodul (62) und dem Zugangssteuermodul (32) und Kommunizieren des Sammelcodes an das Zugangssteuermodul (32);
iii) Betätigen des Verriegelungsmechanismus durch das Zugangssteuermodul (32), um die Sammlung des einen oder der mehreren Gegenstände aus dem einen oder den mehreren Schließfächern (12) bei Empfang des Sammelcodes zu ermöglichen; und
OPTIONAL
iv) Kommunizieren des Sammelcodes durch das Steuermodul (62) an das Datenkommunikationsmittel.

13. Verfahren nach Anspruch 12, ferner umfassend die Schritte:
v) Eingeben des Sammelcodes in das Zugangssteuermodul (32) über die lokale Benutzerschnittstelle (80),
vi) Vergleichen des Sammelcodes mit mindestens einem der Sammelcodes, die in dem Zugangssteuermodul (32) gespeichert sind,
vii) in einem Fall, in dem der Sammelcode mindestens einem Sammelcode entspricht, der in dem Zugangssteuermodul (32) gespeichert ist, Betätigen des Verriegelungsmechanismus, um einen Zugang zu dem Innenraum (28) des einen oder der mehreren Schließfächer zu ermöglichen, die einen oder mehrere Gegenstände der Bestellung lagern.

14. Verfahren zum Abgeben eines oder mehrerer Gegenstände an ein oder mehrere Schließfächer (12) eines Abwicklungszentrums (34) nach einem der Ansprüche 8 bis 11 bei Empfang einer Bestellung von einem oder mehreren Gegenständen, umfassend die Schritte:
i) Identifizieren von einem oder mehreren Schließfächern, die zum Lagern des einen oder der mehreren Gegenstände zugeordnet sind, die für die Bestellung eindeutig sind;
ii) Kommunizieren der Identifikation des zugeordneten Schließfachs an das Steuermodul (62);
iii) Korrelieren der Identifikation des zugeordneten Schließfachs durch das Steuermodul (62) mit einem Sammelcode, der für die Bestellung eindeutig ist; und
OPTIONAL
iv) Identifizieren von einem oder mehreren Gegenständen;
vii) Kommunizieren der Identifikation des einen oder der mehreren Gegenstände an das Steuermodul (62);
viii) Korrelieren der Identifikation des einen oder der mehreren Gegenstände durch das Steuermodul (62) mit dem Sammelcode, der für die Bestellung eindeutig ist.

15. Verfahren nach Anspruch 14, wobei mindestens ein Gegenstand in einem Gefrierschrank gelagert ist und das Verfahren ferner die folgenden Schritte umfasst:
ix) Transportieren des mindestens einen Gegenstands von dem Gefrierschrank zu dem einen oder den mehreren der Schließfächer (12) als Reaktion auf die Eingabe des Sammelcodes in die erste Eingabevorrichtung.

## Revendications

1. Centre de traitement (34) pour traiter une commande d'un ou plusieurs articles, comprenant :
i) une série de récipients de stockage (50), chacun de la série de récipients de stockage (50) étant destiné à stocker un ou plusieurs articles ;
ii) une structure d'armature de grille (40) pour un stockage des un ou plusieurs récipients de stockage (50) en une pile, ladite structure d'armature de grille comprenant une pluralité de pistes agencées selon un motif de grille pour former une structure de grille pour qu'un ou plusieurs dispositifs de manipulation de charge se déplacent sur la structure d'armature de grille et une pluralité de colonnes de stockage verticales (48) configurées pour supporter la structure d'armature de grille ;
iii) un système de transfert comprenant des moyens de transport (35) configurés pour transporter des récipients de stockage (50) depuis la structure d'armature de grille vers une zone de répartition du centre de traitement (34), où les un ou plusieurs articles sont prélevés dans les récipients de stockage pour un transfert ultérieur vers un système d'expédition, ledit système d'expédition (10) comprenant une pluralité de casiers (12) montés sur au moins une paroi extérieure (14) du centre de traitement (34), chaque casier de la pluralité de casiers comprenant un espace intérieur (28) pour stocker un ou plusieurs articles, l'espace intérieur (28) étant accessible par une première ouverture (24) à l'extérieur du centre de traitement et une seconde ouverture (26) à l'intérieur du centre de traitement, chacun de la pluralité de casiers comprenant un capteur de température pour mesurer la température à l'intérieur d'un casier respectif ;
iv) un mécanisme de porte opérable pour fermer sélectivement la ou les premières ouvertures d'un ou de plusieurs de la pluralité de casiers à l'extérieur du centre de traitement (34) et la ou les secondes ouvertures d'un ou de plusieurs de la pluralité de casiers à l'intérieur du centre de traitement ; et
v) un mécanisme de verrouillage configuré pour verrouiller et déverrouiller le mécanisme de porte ;
a) pour empêcher un accès à l'espace intérieur (28) d'un ou plusieurs de la pluralité de casiers à travers la première ouverture respective, mais afin de permettre un accès à l'espace intérieur (28) d'un ou plusieurs de la pluralité de casiers à travers la seconde ouverture respective ; et
b) pour empêcher un accès à l'espace intérieur (28) d'un ou plusieurs de la pluralité de casiers à travers la seconde ouverture respective, mais afin de permettre un accès à l'espace intérieur (28) d'un ou plusieurs de la pluralité de casiers à travers la première ouverture respective ;
iv) un affichage d'état situé au niveau de ou adjacent à chacun des un ou plusieurs de la pluralité de casiers, ledit affichage d'état fournissant une indication de l'état d'un casier respectif ;
v) un module de commande (62) couplé de manière opérationnelle à un réseau comprenant un ou plusieurs processeurs (64) et une mémoire (66) stockant des instructions qui, lorsqu'elles sont exécutées par les un ou plusieurs processeurs (64), amènent les un ou plusieurs processeurs (64), en réponse à une température provenant du capteur de température d'un casier respectif, amènent l'affichage d'état à fournir une indication indiquant si la température de l'espace intérieur du casier respectif est dans une plage autorisée.

2. Centre de traitement selon la revendication 1, dans lequel la pluralité de casiers est regroupée en un sous-groupe de casiers, ledit sous-groupe de casiers comprenant un premier casier et un second casier, les premier et second casiers étant configurés pour stocker un ou plusieurs articles à des températures différentes.

3. Centre de traitement (34) selon la revendication 1 ou 2, dans lequel la première ouverture (24) et la seconde ouverture (26) sont à des extrémités opposées de l'espace intérieur (28) de chaque casier du sous-groupe de casiers.

4. Centre de traitement (34) selon l'une quelconque des revendications précédentes, dans lequel la température de l'intérieur (28) d'au moins la partie du centre de traitement (34) peut être contrôlée pour fournir une température de réfrigération ou une température de congélation, et ;
EVENTUELLEMENT, la plage autorisée couvre la température de congélation couvrant une plage comprise entre sensiblement -25°C et sensiblement 0°C.

5. Centre de traitement (34) selon la revendication 4, dans lequel le mécanisme de porte est positionné de telle sorte que la seconde ouverture (26) d'un ou de plusieurs de la pluralité de casiers (12) est exposée à l'intérieur du centre de traitement jusqu'à ce qu'un ou plusieurs articles dans un ou plusieurs de la pluralité de casiers (12) soient collectés.

6. Centre de traitement (34) selon l'une quelconque des revendications précédentes, dans lequel au moins une partie du centre de traitement comprend un ou plusieurs refroidisseurs, et dans lequel de l'air froid provenant des un ou plusieurs refroidisseurs circule à travers la seconde ouverture 26 d'un ou plusieurs de la pluralité de casiers, amenant la température à l'intérieur des un ou plusieurs de la pluralité de casiers à être maintenue à la même température à l'intérieur du centre de traitement 34.

7. Centre de traitement (34) selon l'une quelconque des revendications précédentes, dans lequel un ou plusieurs de la pluralité de casiers comprennent un ou plusieurs ventilateurs (23) pour faire circuler de l'air frais depuis l'intérieur de l'au moins une partie du centre de traitement (34) vers l'espace intérieur (28) d'un ou de plusieurs de la pluralité de casiers (12).

8. Centre de traitement (34) selon l'une quelconque des revendications précédentes ; comprenant en outre :
i) un module de contrôle d'accès (32) pour contrôler le verrouillage et/ou le déverrouillage du mécanisme de verrouillage pour accorder ou refuser un accès à l'espace intérieur (28) d'un ou de plusieurs de la pluralité de casiers (12) ;
ii) une interface utilisateur locale (80) en coopération avec le module de contrôle d'accès (32), dans lequel le module de commande (62) est configuré pour générer un code de collecte unique à une commande d'un ou plusieurs articles et communiquer le code de collecte au module de contrôle d'accès (32) ;
iii) des moyens de communication de données en coopération avec le module de commande (62) ; lesdits moyens de communication de données étant adaptés pour recevoir le code de collecte en provenance du module de commande de telle sorte que lorsque le code de collecte est ensuite entré dans l'interface utilisateur locale (80), le mécanisme de verrouillage est actionné afin de permettre un accès à l'espace intérieur d'un ou de plusieurs de la pluralité de casiers (12).

9. Centre de traitement (34) selon la revendication 8, dans lequel l'interface utilisateur locale (80) comprend un premier dispositif d'entrée (86) et un second dispositif d'entrée (90), de telle sorte que le module de contrôle d'accès est configuré pour accorder un accès à un ou plusieurs de la pluralité de casiers (12) en entrant le code de collecte dans le premier dispositif d'entrée (86) et le second dispositif d'entrée (90),
éventuellement, le premier dispositif d'entrée est associé à un groupe de casiers (12) de telle sorte que le premier dispositif d'entrée (90) est partagé entre le groupe de casiers (12) et le second dispositif d'entrée (90) est associé à un sous-groupe d'un ou plusieurs casiers.

10. Centre de traitement (34) selon l'une quelconque des revendications 8 ou 9, dans lequel l'interface utilisateur locale (80) comprend au moins un parmi un clavier, un récepteur Bluetooth, un scanner d'image, un microphone, un dispositif de pointage, un dispositif d'entrée biométrique, un dispositif de reconnaissance de visage, un dispositif de reconnaissance d'iris, un dispositif de reconnaissance faciale, un lecteur de communication en champ proche, un lecteur d'identification par radiofréquence, un lecteur de code à barres linéaire et/ou matriciel, un lecteur de carte de paiement, un lecteur de carte à puce, un lecteur infrarouge.

11. Centre de traitement (34) selon la revendication 8 à 10, dans lequel le module de contrôle d'accès (32) comprend des moyens de guidage pour guider un utilisateur vers un ou plusieurs de la pluralité de casiers (12) attribués à l'utilisateur en réponse à l'utilisateur entrant le code de collecte dans l'interface utilisateur locale (80),
éventuellement, les moyens de guidage comprennent un dispositif de sortie pour communiquer un emplacement d'un ou plusieurs de la pluralité de casiers attribués à l'utilisateur.

12. Procédé de collecte d'un ou plusieurs articles à partir d'un ou plusieurs casiers (12) du centre de traitement (34) de l'une quelconque des revendications 8 à 11 à la réception d'une commande des un ou plusieurs articles, comprenant les étapes consistant à :
i) par l'intermédiaire du module de commande (62), générer un code de collecte à la réception de la commande des un ou plusieurs articles,
ii) établir une communication entre le module de commande (62) et le module de contrôle d'accès (32), et communiquer le code de collecte au module de contrôle d'accès (32) ;
iii) par l'intermédiaire du module de contrôle d'accès (32), actionner le mécanisme de verrouillage afin de permettre la collecte des un ou plusieurs articles à partir des un ou plusieurs casiers (12) à la réception du code de collecte ; et
EVENTUELLEMENT
iv) par l'intermédiaire du module de contrôle (62), communiquer le code de collecte aux moyens de communication de données.

13. Procédé (300) selon la revendication 12, comprenant en outre les étapes consistant à :
v) entrer le code de collecte dans le module de contrôle d'accès (32) via l'interface utilisateur locale (80),
vi) comparer le code de collecte avec au moins un des codes de collecte stockés dans le module de contrôle d'accès (32),
vii) dans le cas où le code de collecte correspond à au moins un code de collecte stocké dans le module de contrôle d'accès (32), actionner le mécanisme de verrouillage afin de permettre un accès à l'espace intérieur (28) des un ou plusieurs casiers stockant un ou plusieurs articles de la commande.

14. Procédé de répartition d'un ou plusieurs articles vers un ou plusieurs casiers (12) d'un centre de traitement (34) selon l'une quelconque des revendications 8 à 11 lors de la réception d'une commande d'un ou plusieurs articles, comprenant les étapes consistant à :
i) identifier un ou plusieurs casiers alloués au stockage des un ou plusieurs des articles propres à la commande ;
ii) communiquer l'identification du casier attribué au module de commande (62) ;
iii) par l'intermédiaire du module de commande (62), mettre en corrélation l'identification du casier attribué et un code de collecte propre à la commande ; et
EVENTUELLEMENT
iv) identifier un ou plusieurs articles ;
vii) communiquer l'identification des un ou plusieurs articles au module de commande (62) ;
viii) par l'intermédiaire du module de commande (62), mettre en corrélation l'identification des un ou plusieurs articles et le code de collecte propre à la commande.

15. Procédé selon la revendication 14, dans lequel au moins un article est stocké dans un congélateur, et le procédé comprend en outre l'étape consistant à :
ix) transporter le au moins un article depuis congélateur vers les un ou plusieurs casiers (12) en réponse à l'entrée du code de collecte vers le premier dispositif d'entrée.
